# Europäisches Patentamt

## European Patent Office

## Office européen des brevets

(11) Publication number: **0 154 389**
**B1**

# EUROPEAN PATENT SPECIFICATION

(45) Date of publication of patent specification: **13.12.89**

(51) Int. Cl.⁴: **G 11 B 7/00**

(21) Application number: **85300250.9**

(22) Date of filing: **14.01.85**

(60) Divisional applications **88201566, 88201565** filed on **20.07.88.**

(54) Optical recording apparatus.

(30) Priority: **08.02.84 US 578148**
**08.02.84 US 578149**
**08.02.84 US 578150**
**08.02.84 US 578151**
**08.02.84 US 578152**

(43) Date of publication of application:
**11.09.85 Bulletin 85/37**

(45) Publication of the grant of the patent:
**13.12.89 Bulletin 89/50**

(84) Designated Contracting States:
**DE FR GB NL**

(56) References cited:
**EP-A-0 023 783**
**EP-A-0 077 075**
**EP-A-0 081 757**
**DE-A-3 144 524**
**US-A-4 308 612**

(73) Proprietor: **Laser Magnetic Storage**
**International Company**
**4425 Arrows West Drive**
**Colorado Springs Colorado 80907 (US)**

(72) Inventor: **Verboom, Johannes J.**
**3855 Inspiration Drive**
**Colorado Springs Colorado 80917 (US)**
Inventor: **Bracht, Roger R.**
**1235 Osgood Road**
**Colorado Springs Colorado 80917 (US)**

(74) Representative: **Peters, Rudolf Johannes et al**
**INTERNATIONAAL OCTROOIBUREAU B.V. Prof.**
**Holstlaan 6**
**NL-5656 AA Eindhoven (NL)**

Courier Press, Leamington Spa, England.

## Description

The invention relates to an apparatus for reading data from a medium, in particlar an optical recording apparatus, comprising means for reading data from the medium, which data has been recorded on the medium in fixed block format comprising symbols having a predetermined number, 2(n−1), of recording marks, half written in even positions and half written in odd positions, the reading means being adapted to generate read signals corresponding with the symbols read, and differential decoding means responsive to the read signals for decoding the data read.

Such an apparatus is known from DE—A 31 44 524. In the known optical recording apparatus fixed block code formatted data read from an optical disc is delayed so that the signal values of all symbol positions are present at a series of comparators at the same instant of time, at which time the comparators are operated to determine which two of the locations (assuming a code having two recording marks, e.g. a hole, per symbol) within the symbol have the highest signal values for the recording mark associated power of a reflected laser beam. (Recording mark associated power may be taken to mean the inverse of the power of the reflected laser beam). These are the locations of the recording marks. Thereafter, the recording marks locations are converted from the fixed block code to binary using somewhat complex logic. The entire apparatus is somewhat complicated, expensive in the use of delay lines and comparators, and prone to failure due to loss of signal in the various delay lines.

The aim of the invention is to provide for an apparatus according the opening paragraph in which these disadvantages have been overcome.

According the invention this aim is obtained by an apparatus characterized in that the decoding means comprise symbol counting means for counting the symbol positions of the symbols read, including means for initializing said symbol counter means after reaching the count of the last symbol position of the symbol read, n even sample and hold cells and n odd sample and hold cells; means responsive to said symbol counter means for triggering a first of said n even sample and hold cells at the first even symbol position of a symbol; means responsive to said symbol counter means for triggering successive others of said n even sample and hold cells at successive even symbol positions of a symbol, the number of successive cells triggered corresponding to the number, n−1, of recording marks which may be written in even positions; n(n−1)/2 even comparator means for comparing each even sample and hold cell value with each of the other even sample and hold cell values; means responsive to said symbol counter means and to said even comparator means for retaining the values in the even sample and hold cells having the higher values and for triggering the even sample and hold cell having the lowest value at the next even symbol position and for repeating said retention and said triggering of the even sample and hold cell having the lowest value at the occurrence of every even symbol position for which the fixed-block code may contain a recording mark; means responsive to said symbol counter means for triggering successive others of said n odd sample and hold cells at successive odd symbol positions of a symbol, the number of cells triggered corresponding to the number, n−1, of recording marks which may be written in odd positions; n(n−1)/2 odd comparator means for comparing the each odd sample and hold cell value with each of the other odd sample and hold cell values and means responsive to said symbol counter means and to said odd comparator means for retaining the values in the odd sample and hold cells having the higher values and for triggering the odd sample and hold cell having the lowest value at the next odd symbol position and for repeating said retention and said triggering of the odd sample and hold cell having the lowest value at the occurrence of every odd symbol position for which the fixed-block code may contain a recording mark, and means for deriving the decoded data from the outputs of the odd and even comparator means.

An embodiment of the apparatus is characterized by means for writing recording marks on the surface of the medium in response to write pulses, means responsive to a write pulse for generating a delayed signal indicative of the write pulse, the length of delay being a predetermined time; means responsive to said delayed signal for terminating the triggering of the even or odd sample and hold cell currently being triggered by any of said means responsive to said symbol counter means for triggering an odd or an even sample and hold cell; n(n−1)/2 even write verify register means, each responsive to said delayed signal and to one of said even comparator means, for generating a correct even write signal in response to the simultaneous occurrence of said second delayed signal and an indication from the even comparator means of the detection of a newer higher value in one of the two sample and holds to which it is connected; n(n−1)/2 odd write verify register means, each responsive to said delayed signal and to one of said odd comparator means, for generating a correct odd write signal in response to the simultaneous occurrence of said second delayed signal and an indication from the odd comparator means of the detection of a newer higher value in one of the two sample and holds to which it is connected.

In this embodiment advantageous use is made of the differential detector for verifying the data written.

EP—A—295759 and EP—A—300581 represent divisional applications deriving from this application. They concern an amorphous pip protection apparatus for use is an optical recording apparatus and an apparatus for using differential data detection in write protection of an optical recorder.

The invention is illustrated, merely by way of example, in the accompanying drawings, in which:—

Figure 1 is a block diagram of the read/write channel of apparatus according to the present invention;

Figure 2 shows a TOON code and its corresponding binary equivalent;

Figure 3 is a timing diagram of various signals generated by the read/write channel of Figure 1 in write verify mode;

Figure 4 is a schematic circuit diagram of the circuitry of the read/write channel of Figure 1 and write verify circuits;

Figure 5 is a timing diagram showing the fine timing differences between several of the signals .of Figure 3;

Figure 6 is a block diagram of a variation of apparatus according to the present invention for a 4/15 code;

Figure 7 shows a graph of a read signal offset during reading of a pip to compensate for amorphous pips in apparatus according to the present invention;

Figure 8 shows a signal pattern received from a previously recorded write protect symbol during writing of second write protect symbol in apparatus according to the present invention;

Figure 9 is a schematic diagram of write protect data detection apparatus according to the present invention;

Figure 10 is a schematic diagram of apparatus according to the present invention which gives a clock pulse at specified positions of a TOON symbol;

Figure 11 is a timing diagram of various signals and pulses of a read/write channel in read mode over two symbols and showing the signal levels associated with two possible hole patterns;

Figure 12 is a timing diagram showing the fine timing differences between several of the signals of Figure 11;

Figure 13 is a schematic diagram of a symbol TOON code to binary decoder operable in the read mode of an apparatus according to the present invention;

Figure 14 is a timing diagram of various signals generated by the read/write channel in the search for sync mode for decoding sector marks in an apparatus according to the present invention;

Figure 15 is a schematic circuit diagram of circuits of a read/write channel used for decoding sector marks in an apparatus according to the present invention; and

Figure 16 is a timing diagram of various signals generated by the read/write channel of Figure 15.

An optical recording reading information from an optical disk does so conventionally by means of a laser operated at read power. The beam reflects from the disk, and the drop in reflection normally indicates the presence of a hole. Because reflected spot density distributions have a Gaussian shape, the hole associated power of the reflected beam (the "hole associated power" means the inverse of the reflected power from the disk) spreads a significant distance beyond the boundaries of the holes themselves. Indeed, the hole power present at the centre of the next possible position of a hole in closely spaced systems may be significant. For this reason, differential detection is used to detect the location of the pips from the newly written holes in the preferred embodiment of the present invention.

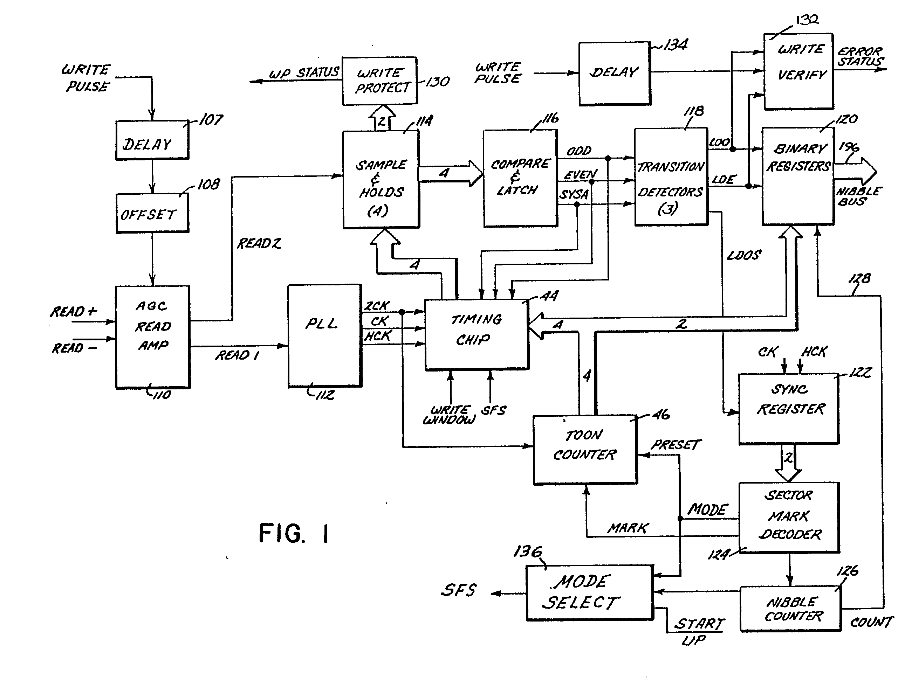

Figure 1 shows a block diagram of the read/write channel of the optical recording apparatus according to a preferred embodiment of the present invention. The pre-amplified signal from the read detector (not shown) is input to an automatic gain control and read amplifier ("AGC") 110 shown in Figure 1, which outputs an amplified and limited read signal on Read 1 and Read 2 outputs. When an optical system (not shown) writes a hole in the disk, it issues a write pulse and a signal indicative of the occurrence of the write pulse. This latter signal is input to a delay 107, which will be discussed below, and a voltage offset 108, which causes the AGC and read amplifier 110 to offset its Read 2 output by a predetermined voltage. This predetermined voltage is approximately the inverse of the voltage caused by an amorphous pip.

The Read 1 output is input to a phase lock loop (PLL) 112 which tracks a pre-recorded clock inscribed in the optical disk, or if the code is self-clocking, the clock information present in the code. The phase lock loop outputs several clock signals, the most important of which is a 2CK clock at a frequency twice that of the pre-recorded clock of the preferred embodiment. The other outputs are CK clock at the frequency of the pre-recorded clock and HCK clock at half the frequency of the pre-recorded clock. The 2CK clock is input to a timing chip 44 and to a TOON counter 46. TOON is the name of the fixed block code of the preferred embodiment. The essential purpose of the counter 46 is to count the number of symbol positions to generate a symbol position address. The function of the timing chip 44 will be discussed *infra*.

The Read 2 output is input to four gated sample and hold cells 114, two each for the respective even and odd symbol positions of the TOON code. The sampling of the cells is controlled by the timing chip 44. The outputs of the cells are input to two comparators 116, an even and an odd comparator respectively, which determine which of the two sample and hold cells has the highest hole associated signal power. The comparator outputs are first latched and then fed back to the timing chip 44 and to a transition detector circuit 118. The transition deectors detect a change in the state of the comparators 116 outputs and signal that change to several circuits: 1) to a pair of binary registers 120, 2) to write verify apparatus 132 and 3) to a sync register 122 which forms part of a sector mark decoder circuitry. The outputs to the binary registers and to the write verify apparatus are differentiated between the even and the odd symbol positions.

For the reading of data, the apparatus converts the "address" of the change in the state of the comparators into binary. The address of the change as represented by the count on the counter 46. This count is recorded by the binary registers 120 and later becomes the binary value of the symbol. Each symbol of the TOON code encodes four bits. After two symbols have been recorded in the binary registers 120, the optical disk recorder reads the eight binary bits of data just decoded out of the registers along a data bus.

The apparatus is also used for the detection of sector marks. An LDOS signal indicative of a change in one of the comparators is supplied to the sync register 122 which, in combination with a sector mark decoder 124, decodes the presence of sector marks and initialises the counter 46 and a nibble counter 126. The nibble counter 126 counts up by one each symbol until the next sector mark. The lowest order bit of this nibble counter, nibble count 0, is output on an output 128 and is used by the binary registers 120 to signal the lapse of two symbols.

Two of the four sample and hold cells 114 are input to a write protect circuit 130, which determines whether a write protect byte has been written as the first byte of data of a data block, and if so, issues a write protect status signal ("WP Status").

The read/write channel operates in three distinct modes depending on the presence of sync and on the presence of a write pulse. At start up (START UP input to a mode select 136) and at the end of a data block (input the nibble counter 126), the mode select 136 causes the timing chip 44 and associated apparatus to enter a search for sync ("SFS") mode. When in sync, the apparatus is normally in read mode. Thereafter, if a write pulse is about to be issued to write a block, the optical system sets the timing chip 44 into write mode. This is indicated by a WRITE WINDOW input to the timing chip 44. (When sync is found, the sector mark decoder 124 outputs a signal to reset the mode select 136).

The present invention pertains an optical recording apparatus for writing data on the optical disk in fixed-block format wherein binary data is encoded into a symbol having a predetermined number of positions in which a predetermined number of holes are recorded. The preferred embodiment uses a so-called TOON code which has eight positions in which holes may be written and one position in which no holes are written. The latter position is normally reserved at the end of the symbol. The TOON code is further constrained to have one hole written at an even position and one hole written at an odd position. Only two holes are written in the symbol.

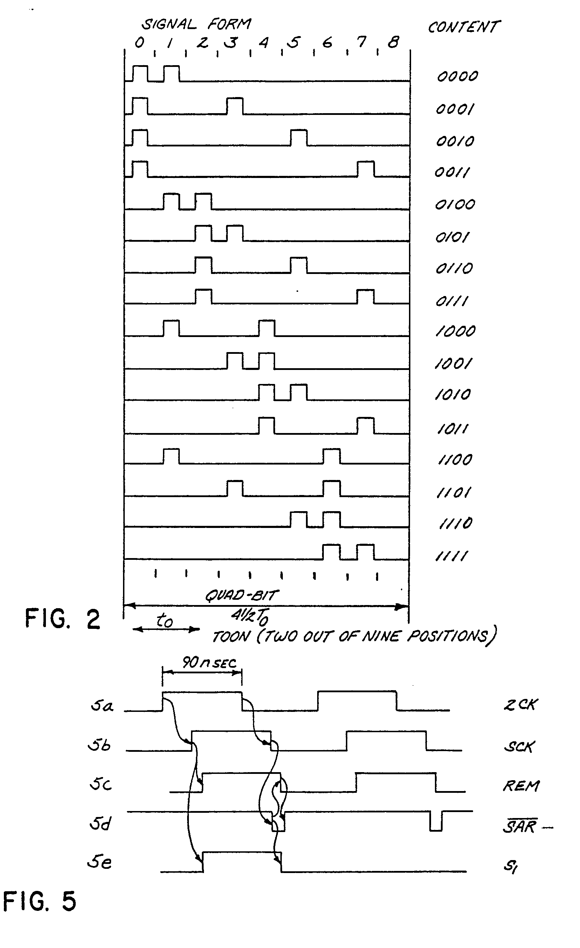

Figure 2 shows the TOON code. It has nine positions numbered in the Figure from zero to eight. The eighth position is the one constrained to never have a hole recorded in it. The other eight positions have one hole in an even position and one hole in an odd position. The TOON code is shown in Figure 2 and the corresponding binary bit values are shown in the table to the right. Each symbol of the TOON code encodes four bits of information.

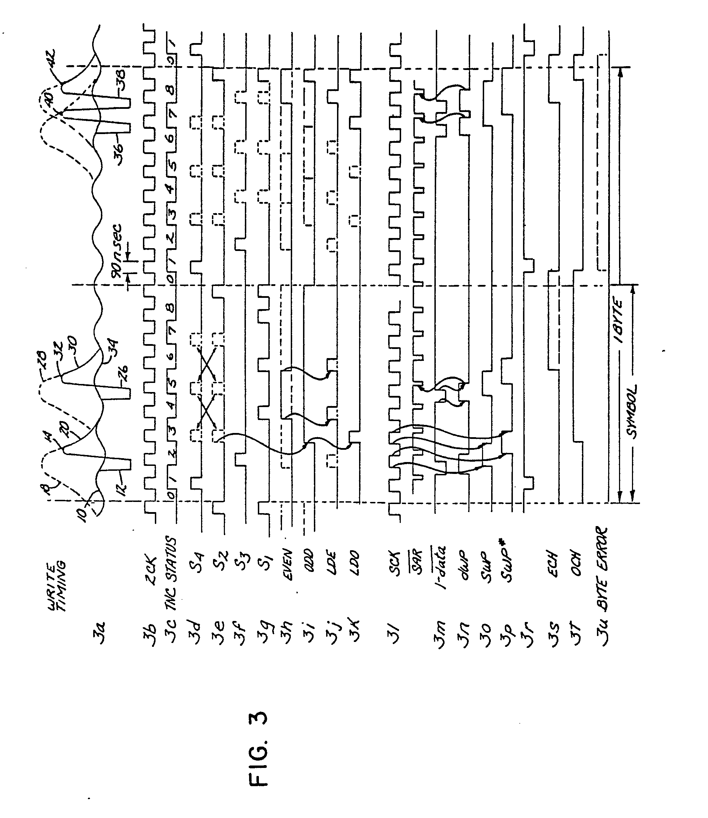

The TOON code is recorded on the media in such a manner that four and one half clock periods, $T_o$, span the symbol. Referring to Figure 3a, the clock is illustrated as a sinusoidal line 10. It is from this signal that the phase lock loop generates the 2CK clock shown in Figure 3b.

In the Figure, the fall of the 2CK clock denotes the beginning of a symbol position and the rise of the 2CK clock denotes the centre of a symbol position. There are exactly nine 2CK clocks in a symbol. In the preferred embodiment, the phase lock loop adjusts the actual phase of the 2CK clock such that a signal SCK, discussed *infra*, which is derived from the 2CK clock but delayed therefrom by a matter of 20 to 30 nanoseconds, is in phase with the pre-recorded clock such that SCK's positive (write mode) transitions occur at the centre of a symbol position. With this in mind, further discussion of symbol positions will be in reference to the 2CK clock.

Figure 3c corresponds to TNCO bit out of the TOON counter 46. It undergoes eight transitions during a symbol and the transitions occur at the centre of a given symbol position. The numbers in the Figure 3 correspond to the number of the symbol position in which the next transition occurs. There is no transition in the ninth symbol position, number 8, primarily because no hole will ever be recognised in this position even if a hole is somehow recorded therein.

Holes are preferably written at the centre of a symbol position. To write a hole, the optical recording apparatus generates a write pulse from a laser beam of approximately 60 nanoseconds in length. The symbol position length or the length of time for a symbol position to pass past a fixed location at typical operating speeds of the optical recording system of the preferred embodiment is 180 nanoseconds. The hole "burned" (actually melted) into the optical recording medium by such a write pulse is typically much larger than 60 nanoseconds in length and may be larger than the 180 nanoseconds length of a symbol position. After the laser beam has been pulsed at write power the optical recording apparatus of the preferred embodiment returns it to a read power level used conventionally to read the pre-recorded clock on the optical recording surface of the disk. The laser beam continues to be focused for a short period of time on the hole just burned in the optical disk. The loss of reflectivity caused by the hole can be detected by the read detectors employed in read apparatus of a conventional optical disk recording system.

Figure 3a also shows the inverse of the power of the reflected laser beam for two typical symbols on the optical recording medium. The drop in reflection caused by the presence of a hole is shown as a positive signal, while the rise in reflection due to a write pulse is indicated by a negative signal. The vertical dashed lines represent the boundaries at the edges of the symbols.

Again referring to Figure 3a, the optical recording apparatus is shown writing a hole at the centre of symbol positions numbers 1 and 4 of the first symbol. In this regard, the write pulse occurs 30 nanoseconds before the rising edge of the 2CK clock and is designed to reach its peak power precisely at the centre of symbol position number 1, approximately at the rising edge of the 2CK clock, 30 nanoseconds later the write pulse is turned off. The write pulse in the Figure is denoted by the negative going waveform 12 and also by a 1-data NOT signal at Figure 3m.

After the write pulse has been terminated and the laser beam restored to its "read" power the laser beam still remains over a portion of the hole just formed in the optical recording medium, assuming, of course, a hole was in fact formed by the write pulse. In this regard, the hole does not reflect the laser beam and the inverse of the signal detected by apparatus detecting the reflected beam generates a high signal or peak at 14. This is the so-called pip. A solid line 20 represents an actual signal, corresponding to the hole associated signal power. During a normal read where the apparatus reads the hole from edge to edge, a hole associated signal would appear as in a dotted line 18 and would peak at a peak 16 which is of greater amplitude than peak 14 of the actual read-after-write signal 20. As can be seen by inspection of Figure 3a, the hole associated power of a hole written at symbol position 1 is present to a significant degree at symbol position 2.

The second negative going pulse in Figure 3a represents a second hole being written in the symbol at the centre of symbol position 4. Here again, dotted line 28 represents the hole associated signal power which would have been received by the read system were it to detect the hole under normal reading conditions. However, as the laser beam detects the hole at least 30 nanoseconds after the centre of the hole has passed, the signal strength is again detected at a peak 32 somewhat less than it would have been under normal read conditions.

Assuming a defect in the disk or perhaps a defect in the writing system, a hole may not be formed. When the write pulse is turned off, the hole associated power of the read signal would then not follow line 30 but would instead follow line 34, which corresponds to the signal of the pre-recorded clock. (The subject of amorphous pips, also considered to be write defects, will be discussed infra).

The second symbol shows holes 40, 42 being written by write pulses 36, 38 at symbol positions 6 and 7.

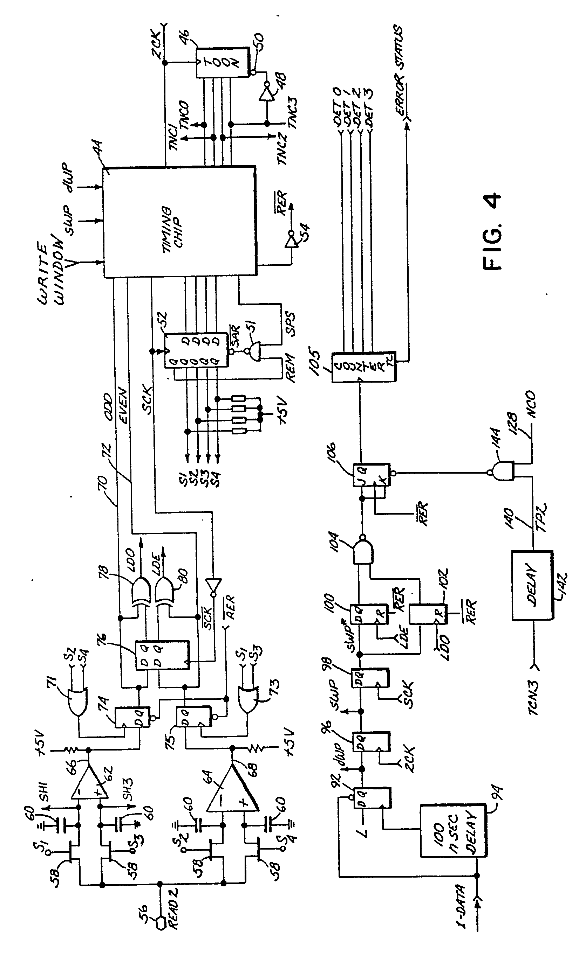

Figure 4 shows apparatus first for detection of the location of a hole and second for comparing the location of the detected hole with the actual location of the write pulse. Much of the apparatus of Figure 4 is shared with other functions of the read/write channel. These othe functions will be explained infra.

Referring to the top right-most part of Figure 4, the 2CK clock derived from the phase lock loop 112 is provided as an input to both the timing chip 44 and the counter 46. The counter 46 counts once for each cycle of the 2CK clock with its four-bit count on outputs TNC0, TNC1, TNC2, TNC3, respectively. A count of 8, the output TNC3, resets the counter to zero due to an inverter 48 feeding the output TNC3 back into master reset NOT 50 of the counter 46.

The timing chip 44 also outputs an RER signal, which is inverted by an inverter 54, to become a RER NOT signal. The signal RER is output once per symbol during the last half period of symbol position 0. The purpose of the signal RER is to signal the end of a symbol to various registers as will be discussed infra, and also to reset other registers.

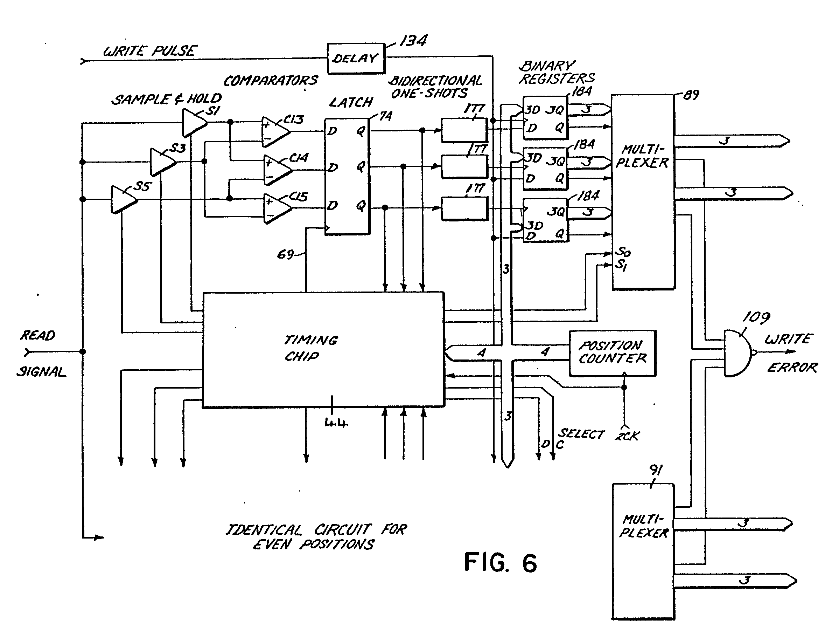

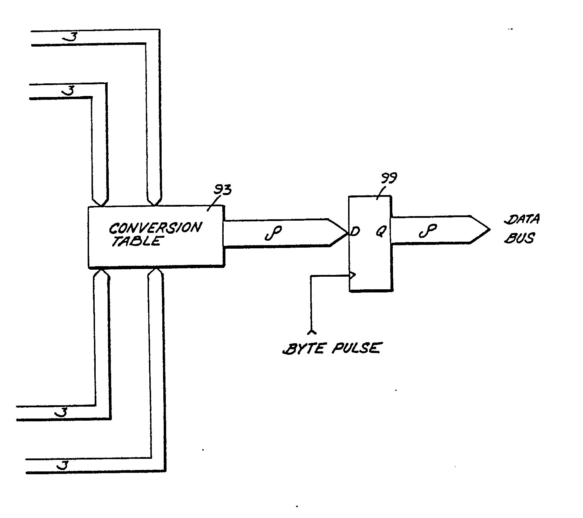

As can be seen from Figure 3l, the timing chip outputs an S-clock ("SCK") signal which corresponds directly with the 2CK clock. The SCK signal is delayed from the 2CK clock by approximately 22.5 nanoseconds as can be seen from Figure 5.

The timing chip 44 also outputs through a clocking register 52 signals S1, S2, S3 and S4 and an REM signal. Signals $1—S4, REM are set by the rising edge of the register 52. A signal SAR NOT resets register 52 and signals S1 to S4, REM. SAR NOT is normally triggered at the falling edge of the SCK signal, see Figure 5 where it can be seen that at the fall of the SCK signal, which occurs 22.5 nanoseconds after the fall of the 2CK clock, causes the timing chip 44 to output an SPS signal, which, when coupled with the REM signal in NAND gate 51, generates the SAR NOT signal (see Figure 5d) which resets the register 52 and thereby resets signals S1 to S4, REM as can be seen from Figure 5e, which shows the resetting of the S1 signal. The resetting of the REM signal also resets the SAR NOT signal. Thus, the S1 to S4 signals are normally "on" for a period of approximately 90 nanoseconds from a point approximately 30 nanoseconds after the rise of the 2CK clock to approximately 30 nanoseconds after its fall.

Referring to the upper left-most of Figure 4, the signals S1 to S4 control corresponding FET gates 58 between a Read 2 input 56 and respective grounded capacitors 60. The combination of a gate and a capacitor forms a sample and hold cell as is known to the art, and the respective sample and hold cells will henceforth be referred to by the respective signals controlling their gates, S1, S2, S3, S4. The signal input on Read 2 line 56 corresponds to the hole associated power of the reflected laser beam as discussed above. Each of the capacitors 60 is also connected two each to respective comparators 62, 64. The comparator 62 operates on the even positions of a TOON symbol and the comparator 64 operates on the odd positions. The comparator 62 compares the signal value on the S1 sample and hold with the signal value then present on the S3 sample and hold, while the comparator 64 compares the signal value in the S2 sample and hold with signal value on the S4 sample and hold. The comparator output the results of the comparison on outputs 66, 68 respectively. These outputs are latched by respective flip-flops 74, 75, the outputs of which are provided as respective inputs 70, 72 to the timing chip 44.

When writing, the optical recorded sets the WRITE WINDOW input to the timing chip 44 and synchronizes the write beam to write for 60 nanoseconds centred on the zero crossing of the pre-recorded clock, the centre of a symbol position. S1 to S4 go high about 30 nanoseconds after the rise of the 2CK clock, just after the centre of the symbol position. When a write pulse has just occurred, the timing chip 44 synchronizes the issuance of the SAR NOT signal to the write pulse by responding to sWP and dWP signals. These two signals, sWP, dWP are the outputs of flip-flops 96, 98, which will be discussed in more detail *infra*, but their function is essentially to generate a delay signal responsive to the write pulse. The purpose of this delay is to delay the turning off of the signals S1 to S4 until the peak of the hole associated signal is sampled. This generally occurs a measureable time after the occurrence of the write pulse, and will be a predetermined time. Signals sWP, dWP are provided as inputs to the timing chip 44. Their timing in relation to a write pulse are shown in Figures 3*m* to 3*o*. The write pulse corresponds to the 1-data NOT pulse, Figure 3*m*.

Referring again to Figure 4, the timing chip 44 initially turns S1 and S2 on during the last half-period of symbol position 8 of every symbol position, see Figures 3*e*, 3*f*. Because symbol position 8 is the symbol position in which no hole is ever written, this sampling is intended to initialise these sample and hold cells to a reference value. An alternative method of initialisation would be to include circuitry to initialise these sample and holds from a fixed reference equivalent to the average signal strength of the no-hole condition.

During the first symbol position of the immediately following symbol, symbol position 0, and even position, sample and hold cell S4 is turned on to sample the signal at the first even cell. During the first odd position, position number 1, sample and hold S3 is turned on to sample the signal at the first odd cell. The signals present on the Read 2 line 56 during these symbol positions are copied into the corresponding capacitors 60 of the sample and hold cells and compared with the signal in the S1 and S2 sample and hold cells, which contain the reference level. If for example, the results of the comparison indicate that S1 sample and hold value exceeds the S3 sample and hold value, the output 66 of the comparator 62 will be low. The output 68 of the comparator 64 will be low if S2 exceeds S4. The timing chip 44 then saves the higher of the two values, S1 (S2). It does this at the next occurrence of an odd (or even) cell by triggering the S3 (S4) sample and hold, which then holds the lowest valued signal of the two. If again the S1 (S2) sample and hold contains the highest value, at the next occurrence of an odd (even) symbol position, the S3 (S4) sample and hold is again triggered. This process continues throughout the symbol with the highest valued sample and hold cell retained and compared with the next sampled value. At the end of the symbol, one of the sample and holds of each comparator will contain the highest valued signal, and this signal corresponds to the hole within the symbol, if there is a hole recorded there.

Referring to the example shown in Figure 3*a*, when the S3 sample and hold cell is triggered at position 1 in the first symbol, it samples the signal caused by the hole just written. The sample and hold samples a read signal at approximately the level indicated at peak 14 of Figure 3*a*. As can be seen by inspection of Figure 3*a*, the signal level at this peak 14 is higher than the signal sampled by the S1 sample and hold at the previous symbol position 8. The signal in the S3 sample and hold is higher than the signal on the S1 sample and hold and is retained. At the next occurrence of an odd symbol at symbol position 5, the timing chip 44 determines that S3 now contains the highest signal and triggers the S1 sample and hold. By inspection of Figure 3*a*, it can be seen that the signal level at this point 30 is higher than the reference signal level but lower than the peak 14 of the signal at position 1. Thus, S3 continues to contain the higher of the two values. The timing chip 44 triggers S1 at the last odd position, position number 7. This value is again less than the value in sample and hold cell S3. (The sequence of triggering of S1 and S3) just described is shown at Figures 3*f* and 3*g*).

If at any time the two signal levels present in the respective sample and holds are about equal, which may occur when the holes are recorded later in the symbol, the state of the comparators 62 or 64 is indeterminate. Either one of the two is retained for the next symbol. This feature is illustrated by the dashed lines shown in Figures 3*d* and 3*e* which show the triggering of the S2 and S4 sample and hold cells.

The timing chip 44 recognises the finding of a new higher valued signal by the change in the outputs of the latched comparators 62 or 64, which are connected to the timing chip 44 *via* flip-flops 74, 75 on lines 70, 72. Figures 3*h* and 3*i*, which show the state of the outputs of the even and odd flip-flops 74, 75, respectively. Note that RER NOT signal initialises flip-flops 74, 75 at the beginning of a symbol.

The outputs of the comparators 62, 64 are provided as inputs to respective flip-flops 74, 75, whose outputs are in turn provided to a register 76 and as one input to exclusive-OR gates 78, 80. The outputs of the register 76 are provided as the other inputs to the exclusive-OR gate 78, 80. Flip-flops 74, 75 are clocked by OR gates 71, 73 respectively, which form the logical OR of the signals S2 and S4, and S1 and S3 respectively. This method of clocking these flip-flops assures that the outputs of the comparators are sampled after the comparators have changed by sampling an even position at the next odd position and an odd position at the next even position. Further state of the flip-flops remains steady for a predetermined clock period. The register 76 is clocked by the inversion of the SCK signal approximately 90 nanoseconds after the clocking of the flip-flop 74. The exclusive-OR gates 78, 80 compare the outputs of the comparator 62, 64 from one symbol position to another and generate a pulse of approximately 90 nanoseconds duration if the outputs change. The exclusive-OR gate 78 is indirectly connected to the output 66 of the comparator 62. Figure 3*j* shows a pulse LDO out of the exclusive-OR gate 78 indicative of the changes in the relative signal levels in the S1 and S3 sample and holds discussed heretofore. The exclusive-OR gate 80 is indirectly connected to the output 68 of the comparator 64. Figure 3*k* shows the pulse out of the exclusive-OR gate 80 indicative of the changes in the relative signal level of sample and hold cells S2 and S4 discussed above. The load odd and load even pulses LDO and LDE occur when a new "higher" signal level has been recognised by the respective comparators.

A 1-data NOT signal which the optical recording system uses to issue a write pulse is provided as an input to a SET NOT input of a flip-flop 92 and also to a variable delay circuit 94. The delay of the delay circuit 94 is adjustable to a maximum delay of 100 nanoseconds so that the circuits of the preferred embodiment can be fine tuned to a particular machine. The delay not only adjusts the setting of the turn-off time of S1 to S4, but also the timing in relation to the LDO and LDE pulses. An 1-data NOT pulse sets the flip-flop 92 and a pulse from the delay circuit 94 resets the flip-flop 92 as the D-input is latched low. The output of this flip-flop is the dWP signal shown in Figure 3*n* and is provided both to the timing chip 44 and to the flip-flop 96. The flip-flop 96 is clocked by the 2CK clock so that the rising edge of the 2CK clock sets the flip-flop and the next rising edge resets it. The output of this flip-flop 96 is the sWP signal shown in Figure 3*o* and is provided to both the timing chip 44 and to the flip-flop 98. The flip-flop 98 is clocked by the inverted SCK signal such that the fall of the SCK signal set the flip-flop and the next fall resets. The signal out of this flip-flop is the sWP* signal shown at Figure 3*p*. From inspection of the Figure, it can be seen that sWP* is delayed about 120 nanoseconds from sWP. The output of this flip-flop 98 is provided as an input to flip-flops 100, 102. These are clocked respectively by the LDE signal and the LDO signal. The delays of the delay circuit 94 and the flip-flops 96, 98 delay the write pulse from reaching the flip-flops 100, 102 until a time corresponding to the "90" nanosecond sampling time of S1 to S4 signals, the delays through the comparator 62, delays through the flip-flops 74, 75 and the register 76, and the delays through the exclusive-OR gates 78, 80.

If a hole has been properly written onto the optical recording surface, a write pulse will be present at the D-input to the flip-flop 100 at the occurrence of the last load even and load odd pulses, LDE and LDO respectively. If, and only if, there is a correspondence between the last occurrence of an LDE signal and an LDO signal and respective write pulses in the even and odd positions will the outputs of the flip-flops 100, 102 be simultaneously at a logical one state. The output of the flip-flop 100 is shown at Figure 3*s* and the output of the flip-flop 102 is shown at Figure 3*t*. If the second write pulse of the first symbol did not write a pulse ocrrectly or if a media defect caused a high level at another even position, the flip-flop 100 will remain off and this is shown in Figure 3*s* by the dashed lines. This same analysis pertains to LDO and the flip-flop 102, (see Figure 3*s*).

The outputs of these flip-flops 100, 102 are input to a NAND gate 104. The otuput of the NAND gate 104 is low if, and only if, the flip-flops 100, 102 have recorded the simultaneous occurrence of write pulses and load even and load odd signals.

A nibble count 0 (128) issued by the nibble counter 126 and a TP 2 pulse 140, which comprises a delayed TNC3 pulse from a delay 142, are inputs to a NAND gate 144, the output of which resets a JK flip-flop 106. Nibble count 0 occurs every other symbol and TP2 occurs at symbol position count 2. After the end of a symbol, the timing chip 44 outputs an RER NOT signal which clocks the JK flip-flop 106. The RER NOT signal is shown at Figure 3*r*. If the state of the inputs to the JK input are zero, the Q output of the JK flip-flop 106 remain unchanged. Thus, during the time of two symbols comprising a byte of data with correctly written holes, the output of the flip-flop 106 will remain 0. However, if either one of the two symbols between the resetting of the flip-flop is incorrectly written, a 1 will be present at the inputs of the flip-flop 106. This will cause the Q output to change to a 1 and remain in that state. The state of the output of the JK flip-flop 106 is shown in Figure 3*u*. If the first symbol had an error, the flip-flop will have a high output at the occurrence of the RER NOT signal at symbol position 0 of the second symbol as indicated by the dashed lines.

In either case, the output of the flip-flop 106 is provided to a count input of a counter 105. The counter 105 is initialised to a predetermined count by inputs DET0 to DET3. The count can be varied to tolerate a certain level of errors. A clock input decrements the counter 105. At a count of 0, the counter 105 outputs on the TC output an error status indicating that the error tolerance has been exceeded.

The reason that the flip-flop 106 indicates the presence of an error in either of two symbols is because each symbol of a TOON code encodes 4 binary bits of data. Thus two symbols encode 8 bits of data. The preferred optical coding system operates on bytes of 8 bits.

The above apparatus was described in conjunction with a TOON code. Other codes having a null in the frequency spectrum are compatible with a pre-recorded clock. One such code is a so-called 4/15 code in which there are 4 holes, two each in the even positions and two each in the odd positions. One position is left empty at the boundary. With this code, means must be provided to detect the highest signal for both the even and the odd positions, and second highest. To do this, one merely has to have three sample and holds instead of two, as well as three comparators. One sample and hold would hold the highest value, the second would hold the next highest and the third would hold the new sample to be compared with the other two. The results of the comparison would indicate whether we had a new highest or a new second highest value. These results would be latched and fed back through to the timing chip, as well as to the write verify registers, the number of which would continue to correspond to the number of latched comparators.

Apparatus according to the present invention for write verifying the 4/15 code is shown in Figure 6 which shows a block diagram of the odd sample and holds and corresponding write verify apparatus. Identical apparatus for the even positions is not shown. S1 is triggered at the first odd position, S3 the next odd and S5 at the third odd position. The outputs of the sample and holds are input to three comparators C13, C14, C15 which compare the outputs of the corresponding sample and holds. These are latched as described above in a latch 74, having 3 inputs and outputs, and clocked by the occurrence of an even symbol position with a signal 69 from the timing chip 44 (or an OR gate 71 as above described). The outputs of the latch 74 are fed back to the timing chip 44 as before and in turn fed into bidirectional one shots or transition detectors 177 which issue a pulse if a change in the latch output to which it is connected is detected. In response to the three latched feedbacks, the timing chip may now determine the relative magnitude of the signals in the three sample and holds and trigger the one with the lowest value at the next odd position. This sequence continues until the last odd position in which a hole may be recorded, the lowest valued sample and hold being the one next triggered.

A pulse from the detectors 177 triggers respective write verify registers 184 to load a delayed write pulse from a delay 134. If there was a correspondence between the delayed write pulse and a change in the latched comparator the output of the write verify register 184 is now a one, else it remains a zero, as above. At the end of a symbol, the final state of the comparators C13, C14, C15 and the sequence of triggering indicates the write verify registers 184 which were triggered by the finding of the highest two values. These are selected by the timing chip through a multiplexer via selects A and B. The multiplexed write verify registers of both the even and the odd positions are then input to a NAND gate 109 to determine whether all the selected write verify registers 184 recorded a simultaneous occurrence of a write pulse when they were triggered. If they did, correct writing has taken place. If they did not, then one of the holes either was not recorded, recorded at an incorrect location or there was a defect on the media causing a drop in reflectivity at another location.

The method of the preferred embodiment is intended to be general with respect to the class of codes having a null in the frequency spectrum at the frequency of the pre-recorded clock. These codes may have any number of holes in the odd and even positions. There must be a sample and hold cell for each such hole, even and odd, plus one. The extra one is the one triggered at the next even or odd position. There are a sufficient number of comparators to determine which is the lowest, next lowest, etc. This requires that each of the sample and holds be interconnected with a comparator to each of the other sample and holds. This requires $n(n-1)/2$ comparators, where n is the number of sample and hold cells. Each comparator must be latched and fed back to the timing chip 44 and also fed to a transition detector which detects a change in the latched output. The transition detector issues a one shot to one of the write verify registers, which loads the delayed write pulse. Selection of the appropriate write verify registers and verification of their contents completes the write verify process.

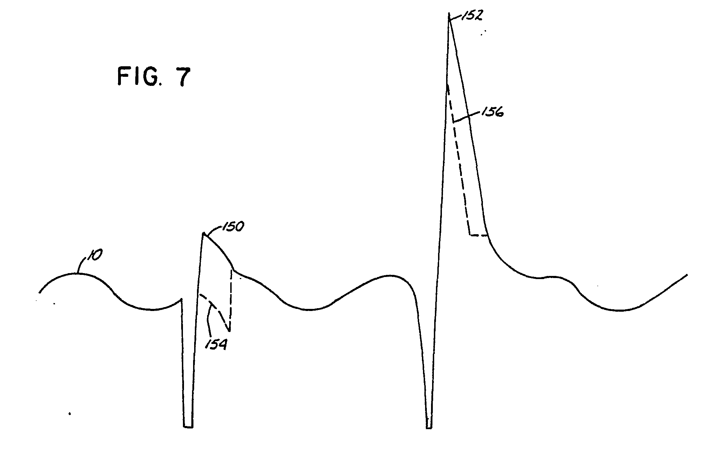

An amorphous pip occurs when conventional optical recording media is not burned (actually melted) into a hole, but only transformed into its amorphous state. The amorphous area has less reflectivity than the medium in its crystalline state, but the reflectivity is still greater than that of a hole. Figure 7 compares a read signal from an amorphous pip with that of a conventional pip due to a hole. The first pip 150 in the Figure is that of the amorphous pip. The second is that of a conventional pip 152. It can be seen that the amorphous pip is about one-fifth as strong as a conventional pip, but it is still stronger than the seignal 10 from the pre-recorded clock. A system using differential detection where the signal forms the symbol positions is compared to a reference which is the signal of the pre-recorded clock, will recognise the amorphous pip as a new higher signal. Further, as amorphous pip occurs at a location where it should be, that is, at a location at which the write pulse attempted to write a hole, the write verify apparatus will incorrectly recognise that a true hole was written.

A solution to this problem lies in providing an offset voltage on the Read 2 output in response to a write pulse. The offset is the same magnitude as an amorphous pip, but opposite in polarity. With the offset injected into the Read 2 output, both the amorphous pip and a conventional pip will appear as dotted lines 154, 156 in Figure 7 respectively. It can be seen that the peak voltage of the amorphous pip does not rise above that of the pre-recorded clock, and thus will not cause the write verify system to recognise it as a hole. However, the conventional pip 152 which is five times as strong as the amorphous pip to begin with, remains much stronger than the signal of the pre-recorded clock, and will continue to be recognised as a hole by the write verify system.

In the preferred embodiment, the offset is provided by the voltage offset 108 responsive to a write pulse delayed by the delay 107, Figure 1, which causes the AGC and read amplifier 110 to offset the pulse of the read 2 output by the predetermined amount heretofore discussed. The delay 107 delays the offset until after the write pulse on the media has been turned off. The voltage offset 108 maintains the offset for a fixed period of time, sufficient to permit the write verify apparatus 132 to complete the sampling of the pip. The actual circuitry for performing this function is not a part of the present invention, and any circuitry within the skill of those skilled in the art which performs the offset function is contemplated.

In the preferred optical recording apparatus, the first byte of every block of data in the write protect byte and comprises a hex 66. In a sector of data in the preferred apparatus, there are three blocks of data: the first block is a vector address block, the second is a user data block, and the third is a post field block. The write protect byte of data is recorded in the first two symbols of these blocks.

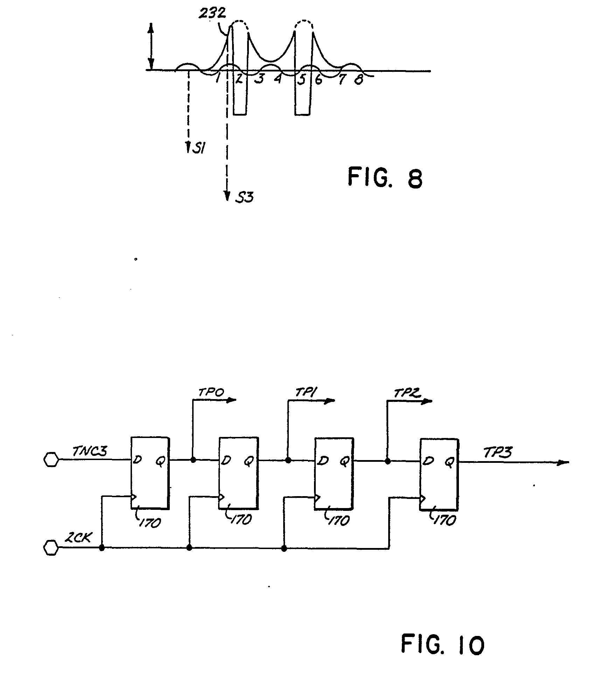

The two symbols each have the same pattern: holes are recorded in positions 2 and 5. The signal pattern one receives in attempting to overwrite a pre-recorded write protect byte is shown by the solid lines in Figure 8. The dotted lines show the peak values of the hole associated power of the read signal were the symbol read under normal reading conditions. The strong negative going pulses centred on positions 2 and 5 represent write pulses rewriting holes at these positions.

The vertical dashed lines in the Figure 8 show the positions in which the sample and holds S1 and S3 are triggered during write verify. The sample and hold S1 samples a signal at the peak of the pre-recorded clock. (It could also have sampled the signal at the negative peak because positive and negative peaks alternate at position 8 of adjacent symbols). The sample and hold S3 samples its signal at the last half of position one. At this point, indicated by intersection 232 of the second vertical dotted line with the solid line, the hole associated power of the signal from the hole at position number 2 is present to a significant degree. In the preferred optical recording apparatus, the total signal excursion of the hole associated power from zero to a positive peak is approximately 500 millivolts. From the example shown, it is apparent that the signal present in the sample and hold S3 exceeds the signal present in the sample and hold S1 by a margin well exceeding 100 millivolts.

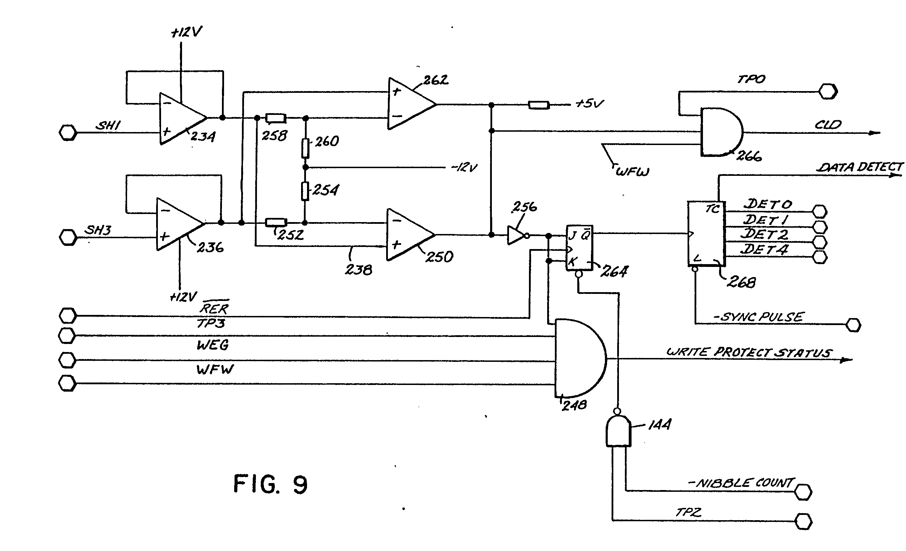

As heretofore mentioned, the sample and holds S1 and S3 are output to a write protect circuit 130, which is shown in more detail at Figure 9. These two outputs, SH1 and SH3 respectively are first buffered by buffer amplifiers 234, 236 so as not to drain the charge from the capacitors 60 of the sample and hold cells. THe output of the buffer amplifier 234 is provided as the input to the positive terminal of a comparator 250. The output of the buffer amplifier is connected to a 40Ω resistor 252 which is in turn connected through a 4.6 kΩ resistor 254 to a −12 v supply. This causes an approximately 100 millivolt drop across the resistor 252. This drop remains approximately 100 millivolts within the range of values of the output of the buffer amplifier 236, i.e., between 0 and 500 millivolts.

The resistor 252 is also connected to the negative input of the comparator 250. The output of this comparator goes low when the value of the sample and hold cell S3 exceeds the value of the sample and hold cell S1 by the value of the drop across the resistor 252, namely, 100 millivolts. If it does after position one the first symbol of a data block, data has been previously recorded in the block.

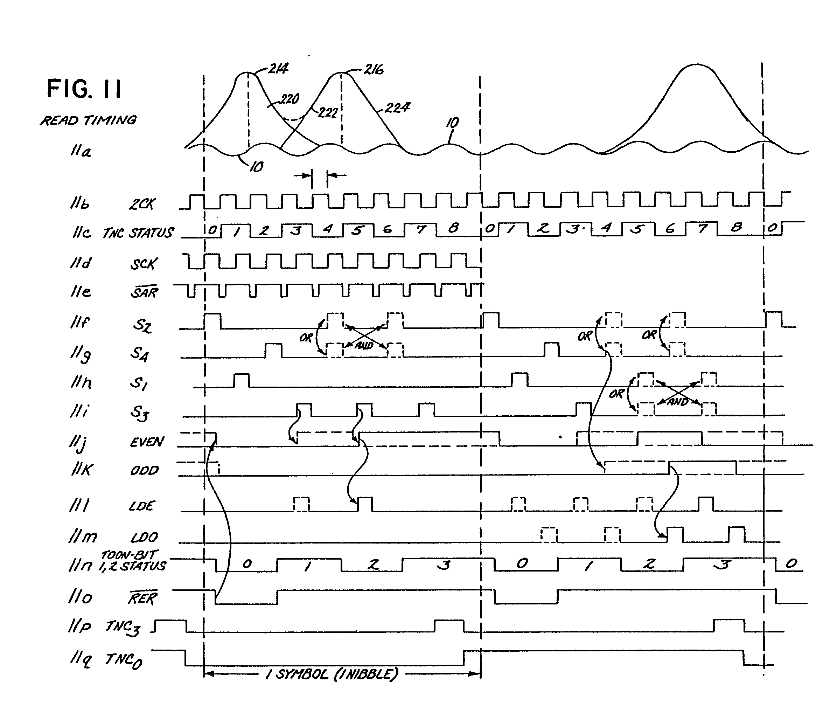

The output of the comparator 250 is inverted by an inverter 256 and provided as one input to an AND gate 248. The other inputs to this gate are signals WFW, which is high at every first byte of a data block, WEG (WRITE WINDOW), which is high during every data block to be written, and TP3, which is an output of the delay 142, see Figure 10, and which occurs at TOON position 3 of a symbol. At the occurrence of all three of these signals and a high signal from the inverter 54 (RER NOT, Figure 4), the AND gate 248 output goes high. This high output comprises a Write Protect Status signal, to which the optical recording apparatus responds by terminating writing. .

The apparatus just described also functions as a data detector by the addition of a second comparator 262 and resistors 258, 260. The output of the buffer amplifier 236 is connected to the positive input to the comparator 262. The output of the buffer amplifier 234 is connected through the resistor 258 which has a resistance of 40 Ω to the negative terminal of the comparator 262. The resistor is also connected across 4.6 kΩ resistor 260 to the −12 v supply, giving the same 100 millivolt drop across the resistor 258 as was found with the resistor 252.

The comparator so connected goes low when the output of the buffer amplifier 234 exceeds the output of the buffer amplifier 236 by more than the drop across the resistor 258, namely, 100 millivolts. This occurs when sample and hold cell S1 exceeds sample and hold cell S2 by 100 millivolts or more.

From the above it is seen that the comparator 262 goes low when the SH1 output exceeds the SH3 output by 100 mv and the comparator 252 goes low when SH3 exceeds SH1 by 100 mv. The outputs of both comparators are wired together and provided as inputs to the inverter 256. Thus the output of the inverter goes high when either of the comparators indicates that the voltage level in one of the sample and holds exceeds the other by 100 millivolts. One sample and hold will exceed the other by such a margin if there is a hole recorded in the media, at either an odd or an even position, or if there is a defect in the media causing a drop in reflection.

The output of the inverter 256 is provided to both the J and the K inputs of a JK flip-flop 264. This flip-flop is reset every other symbol by the occurrence of −nibble count 0 from the nibble counter 126 and the signal TP2 from the delay 142, which are input to NAND gate 144, the output of which is connected to the RESET NOT input of the JK flip-flop 264. The flip-flop is set by a high input on its J and K inputs, which occurs if the comparators 250, 262 indicate the presence of a hole or a defect, and a clock of the signal RER NOT, which is issued each position zero of a symbol. A Q NOT output of the flip-flop 264 is high after reset and goes low if there is a hole or a defect in either of the two symbols before the next reset. If it is low at the next reset, Q NOT goes high. Otherwise, it remains high. A transition from low to high clocks a counter 268 to which the Q NOT output is connected.

The count of the counter 268 is loaded via DET0, DET1, DET2, and DET3 inputs from the optical recording apparatus. At each clock of the counter, the counter decrements by one. On reaching its terminal count, the counter outputs on its TC output a signal indicative of the presence of data or defects. The count in the counter 268 can .be adjusted to tolerate a certain level of noise or defects, the particular tolerance level chosen being a design choice in view of the error correction chosen.

The output of the comparators 262, 250 are also connected to an AND gate 266. The other inputs to this gate are the signal TPO from the delay 142 and the WFW signal, which is on during the first byte of a block of data. The concurrence of these signals indicates the lack of data at the write protect byte of the data block. The signal is provided to the system as an alternate method for checking whether data has been recorded in a block of a sector.

The delay 142 is shown in Figure 10. The TNC3 output from the counter 46 is input to the first of a series of interconnected flip-flops 170. The TNC3 output is high during count 8 of the counter 46 and is low at all other counts. Each of the flip-flops is clocked by the 2CK clock. Thus the outputs of successive flip-flops go high in response to a high TNC3 output at successive TOON symbol positions, i.e. at TP0, TP1, TP2, TP3, etc. These outputs are used by the optical recording apparatus according to the present invention as above-described.

Figure 11a shows the inverse of the power of a reflected laser beam for two typical symbols on the optical recording disk. The optical recording surface reflection indicates the presence of holes at the centre of symbol positions numbers 1 and 4 of the first symbol. Holes do not reflect the laser beam and the inverse of the signal detected by apparatus detecting the reflected beam generates a high signal at 214, 216 in the Figure. As can be seen by inspection of Figure 11a the hole associated power 220 of a hole written at symbol position 1 will be present to a significant degree at symbol position 2.

The second positive going pulse in Figure 11a represents a second hole written in the symbol at the centre of symbol position 4. Here again, line 228 represents the hole associated signal power which is received by the read system detecting the hole under normal reading conditions.

Assuming a defect in the media or perhaps a defect in the writing system, a hole may not be formed in the media. When the position is "read", the hole associated power of the read signal, such as for the first hole in the Figure 11a, then does not follow line 220 but instead follows the line 10 which corresponds to the signal of the pre-recorded clock.

The second symbol shows holes written at symbol positions 6 and 7. Note that the signal power from the two holes significantly overlap and the signal merges into one large bell-shaped curve.

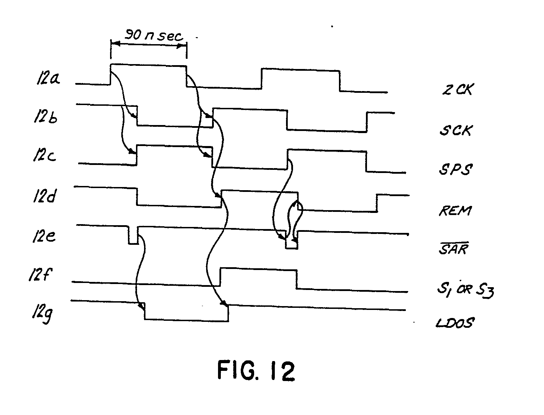

As can be seen from Figure 11d, the timing chip outputs an S-clock ("SCK") signal which corresponds directly with the 2CK clock. The SCK signal is delayed from the 2CK clock by approximately 22.5 nanoseconds and inverted therefrom as can be better seen from relative timing diagram Figure 12. Because the SCK clock is inverted in the read mode from its state in the write mode, the timing of SPS, REM and S1 to S4 are also changed to be delayed on half of the period of the 2CK clock (90 nanoseconds) later. Thus where S1 to S4 were triggered during the latter half of a symbol in the write mode in order to sample the pip after the write pulse, they are triggered during the first half of a symbol position during read in order to sample the peak hole value occurring at the centre of a symbol position.

During the first symbol position of a symbol, symbol position 0, an even position, sample and hold cell S2 is turned on to sample the signal at the first even cell. During the first odd position, position number 1, sample and hold cell S1 is turned on to sample the signal at the first odd cell. The signals present on the Read 2 line 56 during these symbol positions are copied into the corresponding capacitors 60 of the sample and hold cells. At the next even position, sample and hold cell S4 is triggered to record the signal level at symbol position number 2, and at the next odd position, sample and hold cell S3 is triggered to record the signal level at symbol position at symbol position number 3. The comparator 62 compares the value of sample and hold cells S1, S3, the odd sample and hold cells, and the comparators 64 compares the value of sample and hold cells S2, S4, the even sample and hold cells. If, for example, the results of this former comparison indicate that the sample and hold cell S1 value exceeds the sample and hold S3 value, the output 66 of the comparator 62 will be low. The output 68 will similarly be low if the sample and hold cells S2 value exceeds the sample and hold cell S4 value. The timing chip 44 then saves the higher of the two values, S1 (S2). It does this at the next occurrence of an odd (or even) cell by triggering the other sample and hold cell S3 (S4), which then holds the lowest valued signal of the two. If again the sample and hold cell S1 (S2) contains the highest value at the next occurrence of an odd (even) symbol position, the sample and hold cell S3 (S4) is again triggered. This process continues throughout the symbol with the highest valued sample and hold cell retained and compard with the next sampled value. At the end of the symbol, one of the sample and holds of each comparator will contain the highest valued signal, and this signal corresponds to signals generated by the holes within the symbol, if there were holes recorded there.

Referring to the examples shown in Figure 11a, when the sample and hold cell S1 is triggered at position 1 in the first symbol, it samples the signal caused by the first hole 20 shown in the example. The sample and hold samples a read signal at approximately the level indicated at point 214 on Figure 11a. The sample and hold cell S3 is next triggered at position 3 and samples a signal approximately the level indicated at point 222 in Figure 11a. As can be seen by inspection of Figure 11a, the signal level at point 214 is higher than the signal at point 222. Therefore, the sample and hold cell S1 is retained. At the next occurrence of an odd symbol, at symbol position 5, the timing chip 44 determines that the sample and hold cell S1 now contains the highest signal and triggers the sample and hold cell S3. By inspection of Figure 11a, it can be seen that the signal level at this point 224 is higher than the reference clock signal but lower than the peak value 214 of the signal at position 1. Thus, sample and hold cell S1 continues to contain the higher of the two values. The timing chip 44 triggers the sample and hold cell S3 at the last odd position, position number 7. This value is again less than the value in the sample and hold cell S1. (The sequence of triggering of the sample and hold cells S1 and S3 just described is shown at Figures 11f and 11g).

If at any time the two signal levels present in the respective sample and hold cells are about equal, which may occur when the holes are recorded later in the symbol, the state of the comparators 62 or 64 is indeterminate. Either one of the two is retained for the next symbol. This feature is illustrated by the dashed lines shown in Figures 11d and 11e which show the triggering of the sample and hold cells S2, S4.

The Figures 11f and 11g also show the triggering of the sample and hold cells S1 to S4 for the second exemplary symbol shown in Figure 11a.

As described above in connection with the discussion of the write verify circuits, the timing chip 44 recognises the finding of a new higher valued signal by the change in the outputs of the comparators 64 or 62 as can be seen by inspection of Figures 11j and 11k, which show the state of the outputs of the flip-flops 75 and 74 which are coupled to the even and odd comparators respectively.

As before, the outputs of the comparators 62, 64 are provided as inputs to respective flip-flops 74, 75, whose outputs are in turn provided to the register 76 and as one input to the exclusive-OR gate 78, 80. The exclusive-OR gates 78, 80 compare the "outputs" of the comparators 62, 64 from one even or odd symbol position to another and generate LDO or LDE pulses. Figure 11l shows the pulse LDO out of the exclusive-OR gate 78. Figure 11m shows the pulse out of the exclusive-OR gate 80. The load odd and load even pulses LDO and LDE occur only when a new "higher" signal level has been recognised by the respective comparators.

Referring again to Figure 2, it can be seen from inspection that there is a systematic correspondence between the location of the even position symbol and the first two binary bits and likewise a systematic correspondence between the location of the odd symbol and the second two binary bits. The correspondence is that the symbol position address divided by 2, ignoring fractions, directly converts the symbol location into the binary equivalent for the two corresponding bits.

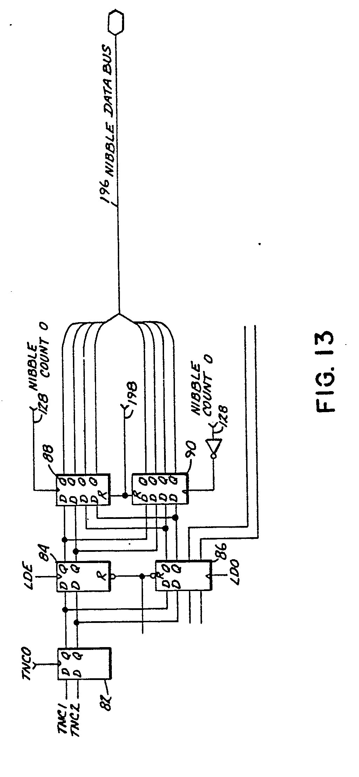

Referring again to Figure 13, the symbol position address divided by two, ignoring fractions, is just the state of the TNC1 and TNC2 outputs from the counter 46. These outputs are therefore provided to an address register 82. The state of these outputs changes every other transition of TNC0. Therefore, TNC0 clocks the address register 82. The outputs of the address register 82 are provided to even and odd binary registers 84, 86 respectively.

These registers 84, 86 are in turn clocked by LDE and LDO respectively. These latter signals occur, as noted above, each time the state of the comparators 64, 62 change; however, the last time they change corresponds to the location of the holes, as the holes generate the highest hole associated signal power. Therefore, these even and odd binary registers are clocked the last time in the symbol at the location of the respective even and odd holes and the then current address of the respective holes (divided by 2, ignoring the remainder) then present in the address register 82 is copied into the binary registers 84, 86.

As the combination of these two binary registers 84, 86 yields the correct four-bit decoding for the symbol, the outputs of these two registers are provided to a first symbol four-bit register 88, which contains the four bits decoded from the first symbol of pair of symbols which encode an eight bit byte of data, and also to a second symbol four-bit register 90, which contains the four binary bits decoded from the second of a two-symbol pair. The first symbol four bit register 88 is clocked by the nibble count 0 (128) signal from the nibble counter 126 coupled to the sector mark decoder 124, and the second symbol four bit register 90 is clocked by the inversion of nibble count 0. As mentioned above, the nibble counter 126 counts the number of symbols in a sector and nibble count 0 (128) undergoes a positive transition every other symbol.

At the end of a symbol, the binary registers are reset by the RER NOT signal. At the end of two symbols, the data for one byte is read out on a nibble data bus 196 to the optical recording apparatus, which issues an acknowledge signal 198, which in turn resets the two four bit registers 88, 90.

The above apparatus was described in conjunction with a TOON code. Other codes having a null in the frequency spectrum are compatible with a pre-recorded clock. One such code is a so-called 4/15 code in which there are 4 holes, two each in the even positions and two each in the odd positions. One position is left empty at the boundary. With this code, means must be provided to detect the highest signal for both the even and the odd positions, and the second highest. To do this, one merely has to have three sample and holds instead of two, as well as three comparators. One sample and hold would hold the highest value, the second would hold the next highest and the third would hold the new sample to be compared with the other two. The results of the comparison would indicate whether we had a new highest or a new seond highest value. These results could be latched and fed back through to the timing chip, as well as to the address decoder which would convert the addresses of the holes into binary.

Apparatus for decoding the 4/15 code is shown in Figure 6, which was substantially described above in relation to the write verify function. The read mode, the sample and hold cells are triggered as described above in the read mode, i.e. the sample and hold cell S1 is triggered at the first odd position, the sample and hold cell S3 the next odd and the sample and hold cell S5 at the third odd position. In response to a pulse from the detector 177, the binary registers 184, instead of loading the delayed write pulse, load the address from the counter 46, the lowest order bit clocking the next three higher bits. From the final state of the latched comparators, the timing chip knows which one has the lowest value, the next highest and the highest value. This information is provided to a multiplexer 89 via select lines A and B. The multiplexer places on its two sets of outputs the addresses contained in the two selected binary registers. The multiplexed outputs are provided to a conversion table 93, which converts the addresses of the four holes into binary and provides the results to a register 99, which is clocked by a byte pulse once per byte. Because the 4/15 code encodes eight bits, this byte pulse occurs every symbol.

The method of the preferred embodiment is intended to be general with respect to the class of codes having a null in the frequency spectrum at the frequency of the pre-recorded clock. These codes may have any number of holes in the odd and even positions. There must be a sample and hold cell for each such hole, even and odd, plus one. The extra one is the one triggered at the next even or odd position. There are a sufficient number of comparators to determine which is the lowest, next lowest, etc. This requires that each of the sample and hold cells be interconnected with a comparator to each of the other sample and hold cells. This requires $n(n-1)/2$ comparators, where n is the number of sample and hold cells. Each comparator must be latched and fed back to the timing chip 44 and also fed to transition detectors which detect a change in the latched output. The transition detectors issue a one shot to the binary registers, which load the address of the "hole" by loading the count of the counter 46 as clocked by the lowest order bit of the count. The final state of the latched comparators reveals those binary registers containing addresses of holes as opposed to spurious information, and these addresses can be decoded by a decoder into binary.

In contrast to holes the marks of a sector mark are pre-recorded on the disk during manufacture. The marks essentially comprise recesses stamped into the optical recording surface to a depth of approximately one-quarter wavelength of the laser beam. While the mark may be coated with reflective material, the depth of the mark causes the beam reflected from the bottom of the mark to be 180° out of phase with the incoming beam. Thus the reflected beam is cancelled by the incoming beam.

In the preferred optical disk, there are 32 sector marks per revolution each comprised of 16 pre-recorded marks, and further having a preceding and following data symbol in which no data is recorded.

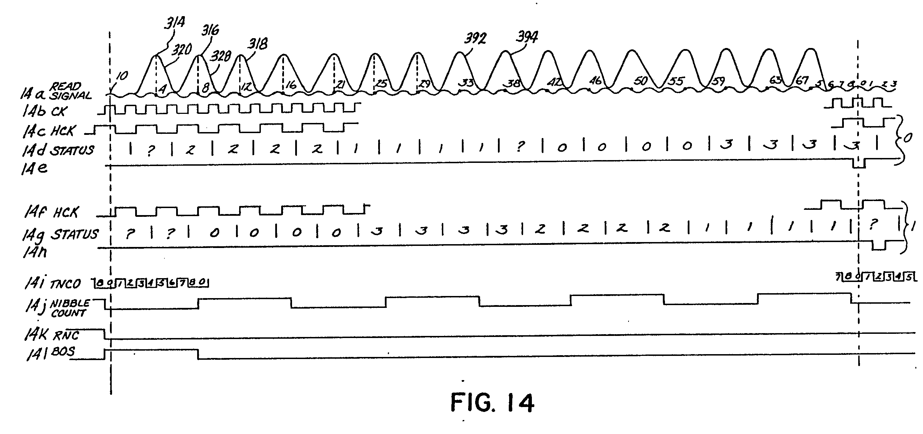

Figure 14a shows the inverse of the power of the reflected laser beam for the sixteen marks of a typical sector mark pre-recorded on the optical recording medium. The absence of reflection caused by the presence of a mark is shown as a positive signal, while the presence of reflection is indicated by a negative signal. The vertical dashed lines in the Figure represent the boundaries of the sector mark field. The corresponding data symbol position numbers as indicated by the counter 46 at the boundaries are indicated in Figure 14i.

Again referring to Figure 14a, the optical recording surface reflection indicates the presence of marks at the centre of symbol positions numbers 4 and 8 of the first symbol of the field. The marks do not reflect the laser beam and the inverse of the signal detected by apparatus detecting the reflected beam will generate a high signal at 314 and 316 in the Figure. As can be seen by inspection of the Figure, the hole associated power 320 of the mark at symbol position 4 will be present to a significant degree at symbol position 5.

The second positive going pulse 328 in Figure 14a represents a second mark pre-recorded at the centre of symbol position 8. Here again, the pulse 328 represents the hole associated signal power which is received by the read system when it detects the hole under normal reading conditions.

Both the first and the second marks occur at even symbol positions. This violates the TOON code rule that holes appear at one even and at one odd symbol position. The third mark 318 occurs at symbol position number 8. This additionally violates the TOON rule that no hole appear at this position. Thus the sequence of marks of a sector mark can readily be distinguished from the sequence of holes of a data symbol.

Further inspection of Figure 14a shows that the sixteen sector marks are grouped into four groups. The first four occur at even field position numbers four positions apart, beginning at field position number 4. The next four occur at odd field position numbers beginning at field position number 21, each four positions apart. (The counter 46 does not actually count to 21; it resets after 8. However, the sector mark field can be viewed as a unity having 72 positions, 0—71). The third group of four occurs at even positions beginning at position number 38, each four positions apart. The fourth group occurs at odd positions beginning at position number 55, each four positions apart.

Placing an even number of marks on the rising edge and on the falling edge of the pre-recorded clock preserves a null in the frequency spectrum at the frequency of the clock because the frequency components of those signals on the rising edge are 180° out of phase with those at the falling edge, leading to mutual cancellation.

Figure 14c shows a HCK signal in a first phase relationship to the CK clock and Figure 14f shows the HCK signal in a second phase relationship to the CK clock. The HCK signal may assume either of these phase relationships at start-up, because the HCK signal is essentially the output of a bistable flip-flop clocked by the clock CK. Referring to Figure 14c in conjunction with Figure 14b, the state of the CK clock and the HCK signal shortly before the centre of the first mark 314 shown in Figure 14a is 00, i.e. both have a zero state. This relative state is maintained at each of the next three marks of the first group. If the HCK signal were delayed by one-half period of the CK clock, the relative states would be 11, the leftmost bit representing the HCK signal and the rightmost CK clock. In a modulus four number system, this is the number 3. If the address of the mark were recorded one-half period of the CK clock later, the state of the CK clock and delayed the HCK signal would now be 2. Referring to Figure 14d, which shows a series of numbers separated by vertical dashed lines, the number 2 appears after each of the four marks of the first group. This number corresponds to the least significant digit of the mode 4 address+1 of the field position in which the mark occurred as determined by the CK clock and a shifted HCK signal.

With the HCK signal shifted right, the relative states of the two clocks proceed in the sequence 0 3 2 1. That is 1+2=1, 1+1=0, 1+0=3, and 1+3=2. The second group of four marks occurs plus one position from the mod 4 positions of the first group. Thus the state of the CK clock and the shifted HCK signal is 1+2=1, and these are the mod four addresses+1 of the second group. The mod 4 addresses+1 of the third group are 0; and the mod 4 addresses+1 of the fourth group are 3.

Were the HCK signal to start in the opposite state at start-up, shown in Figure 14f, then the mod 4 addresses+1 would be plus 2 from the above-reference addresses: 2+2=0, 1+2=3, 0+2=2, and 3+2=1. These addresses are shown in Figure 14g.

In either case, the sequence of addresses shows the same mod four order 2 1 0 3 or 0 3 2 1; one being offset from the other by a count of two. These addresses are used by the apparatus of the present invention to determine whether a sector mark is present.

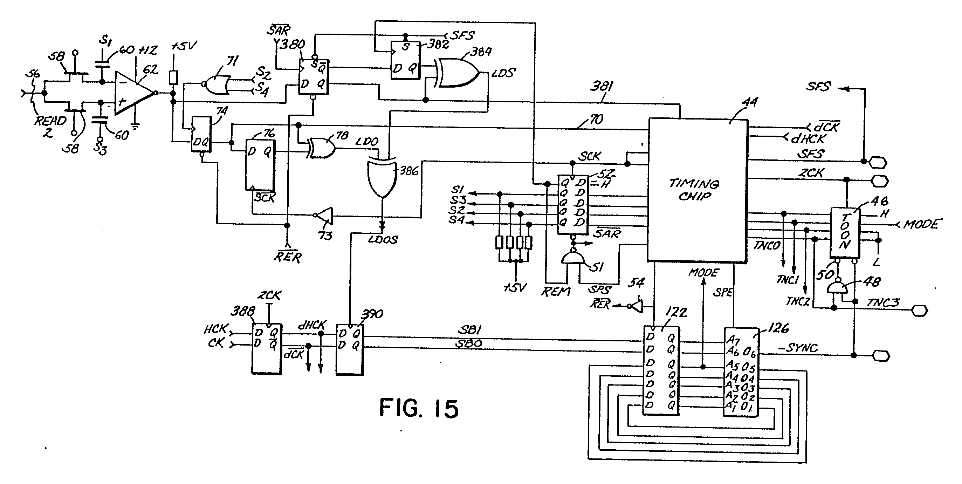

Figure 15 shows apparatus according to the present invention first for detection of the location of and second for the decoding of a sector mark. Much of this same circuitry has heretofore been described in relation to reading and writing of symbols.

The sample and hold cells and comparators of this circuitry function in the same manner as described above. However, the other functions of the circuitry are either changed or disabled. These changes will be described shortly.

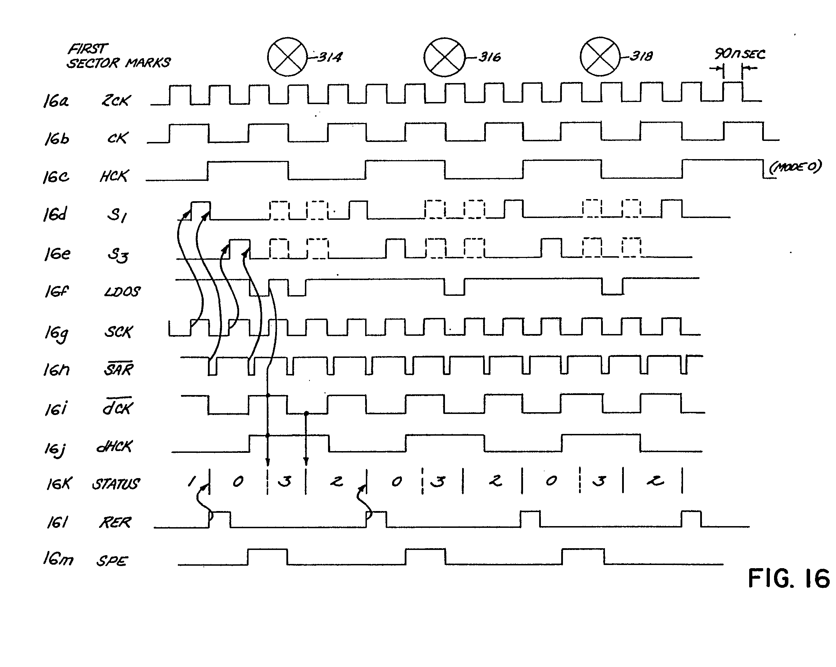

Referring to the top right-most part of Figure 15, the 2CK clock derived from the phase lock loop 112 is provided as an input to both the timing chip 44 and the counter 46. See Figure 12a for the 2CK clock. The fall of the 2CK clock denotes the beginning of a position and the rise of the 2CK clock denotes the centre of a position. (See Figure 16a for the positioning of the 2CK clock relative to the three marks 314, 316, 318). There are exactly nine 2CK clocks in a data symbol and four in a sector field section. The rise of the 2CK clock occurs approximately at the zero crossings of the pre-recorded clock. The phase relationship is adjusted to provide that the clocking of the sample and hold cells, infra, occurs at such a time that the peak value of the signal from a hole is sampled.

The counter 46 counts once for each cycle of the 2CK clock with its four-bit count on outputs TNC0, TNC1, TNC2 and TNC3, respectively. A count of 8, output TNC3, synchronously (at the next clock) resets the counter to zero due to the inverter 48 feeding TNC3 back into the master reset NOT 50 of the counter 46. The state of the output TNC1 is shown at Figure 14n and the state of the output TNC3 is shown at Figure 14p.

The timing chip outputs the S-clock ("SCK") signal which corresponds directly with the 2CK clock. The SCK signal is delayed from the 2CK clock by approximately 22.5 nanoseconds and inverted therefrom as can be seen from relative timing diagram Figures 12a and 12b. Note that the timing for the timing chip 44 in the search for sync mode is essentially the same as it is for the read mode.

The timing chip 44 also outputs through the register 52 signals S1, S2, S3, S4. The register 52 is clocked by the SCK signal as better seen in Figure 12 where S1 rises shortly after the rise of the SCK signal.

The timing chip 44 also outputs the RER signal, which is inverted by the inverter 54, to become the RER NOT signal. The RER signal is output once per section at every count of 0 of dCK NOT and dHCK (Figure 16/). The purpose of the RER signal is to signal the end of a section to various registers as will be discussed *infra*, and also resets other registers.

The two signals CK NOT and HCK are the outputs of the register 388 having the CK and HCK signal as inputs and as clocked by the 2CK clock. dCK NOT is output on the Q NOT output of the register 388 and is the delayed and inverted CK clock. As the period of delay is 2CK, one-half CK, dCK NOT directly corresponds to the CK clock, but is delayed by the gate delays of the register 388. The two signals, dCK NOT and HCK are provided as inputs to the timing chip 44 and to an address register 390. One cycle of the four relative phase states of the dCK and HCK signals comprise one sector field section as can be seen from Figures 16/ through 16/.

The Read 2 output from the optical disk is input to two sets of sample and hold cells 114, one odd and one even. However, and referring to the upper left hand portion of Figure 15, the pair of gates 58 and capacitors 60 comprising the odd sample and hold cells are the only two sample and hold cells used to decode sector marks. The even sample and holds are not used. The sequence of triggering of the sample and hold cells S1 and S3 is similar to that of the read mode and is designed to determine the location of the sector mark position where the highest signal value occurred, presumptively, the location of a mark. The triggering of the sample and hold cells is illustrated in Figures 16*d* and 16*e*. The dashed lines show the triggering of the sample and hold cells S1, S3 when it can not be determined which of the two initially hold the higher signal.

As before, the timing chip 44 recognises the finding of a new higher valued signal by the change in the output of the comparator 62. The output of the comparator 62 is provided as an input to respective flip-flops 74, 80. The flip-flop 80 will be discussed momentarily. In the read mode, the output of the flip-flop 74 is in turn provided to the register 76 and as one input to the exclusive-OR gate 78. The output of the register 76 is provided as the other input to the exclusive-OR gate 78. In the read mode, the flip-flop 74 is clocked by the OR gate 71, which forms the logical OR of the signals S2, S4. However, in search for sync mode, the timing chip 44 never issues S2 or S4. Thus the flip-flop 74 is never clocked and the state of LDO constantly remains zero. Therefore, the state of LDOS, the output of the exclusive-OR gate 386, tracks the state of its other input, LDS.

In more detail, at start-up or after the nibble counter 126 has reached a predetermined count indicative of the end of a data sector (see the inputs to mode select 136 in Figure 1), the mode select 136 issues an SFS signal indicative of a *Search for Sync* mode for the read/write channel. This signal is provided as an input to the timing chip 44 and the SET NOT inputs of the flip-flops 380, 382. This sets the SFS mode in the timing chip and it alters the pattern of issuance of the respective S1 to S4 signals, and the RER NOT signal (formerly issued during position number 0 of a data symbol). When in SFS mode, the timing chip does not issue signals S2, S4. Thus the even sample and hold cells and comparator, etc., and the OR gate 71, are inoperative. The flip-flop 74 is never clocked and cannot register the state of the output of the comparator 62. As the RER NOT signal resets this flip-flop, it remains in an off state. The register 76, which samples the output of the flip-flop 74, also remains in an off state. As a result, LDO remains permanently off during SFS mode. This enables the exclusive-OR gate 386 connected to LDO to reflect the state of its other input, LDS, which will be discussed momentarily.

When the SFS signal is not high, during normal read or write verify operations, the SFS signal causes both flip-flops 380, 382 outputs to be low. When both these outputs are low, the LDS output of the exclusive-OR gate 384, to which they are connected, is also low. When the LDS output is low, the LDOS output of the exclusive-OR gate 386 connected to it and to LDO reflects the state of LDO.

The flip-flops 380, 382 and the exclusive-OR gate 384 serve the same function as the flip-flops 74, the register 76 and the exclusive-OR gate 78, i.e. they detect a transition in the output of the comparator 62 and signal that transition by issuing a 90 nanosecond pulse. However, as the Q NOT output of the flip-flop 380 is provided as an input to the flip-flop 382 and the Q output of the flip-flop 382 is compared in the exclusive-OR gate 384 to the Q output of the flip-flop 380, the logical level of the LDS output is inverted from the logical level of LDO. LDS and LDOS output are normally high when no transition occurs and go low when a transition is detected. (See Figure 16*f*).

The flip-flop 382 is clocked by the REM signal of the register 52. The REM signal goes high when the signal S1 or S3 go high. Ninety nanoseconds later, the REM signal goes low. When the REM signal goes low, it immediately terminates the SAR NOT signal from the NAND gate 51. The SAR NOT signal, which was low, then goes high. When the SAR NOT signal goes high, it clocks the flip-flop 380 to copy the new state of the comparator 632. The previous state is currently in the flip-flop 382. Thus the current state and the previous state are compared in the exclusive-OR gate 384 until the next REM signal which occurs at the next rise of the SCK signal ninety nanoseconds later.

The Q output of the flip-flop 380, which directly reflects the state of the comparator 62, is provided as an input 381 to timing chip 44 which determines from the state of the input which sample and hold cell has the highest-valued signal and which to trigger next, just as in the read mode.

In the search for sync mode, the timing chip 44 triggers the sample and hold cell S1 at each count of 1 of dHCK and dCK NOT. This is the last position of a section. It triggers the sample and hold cell S3 at each count of 0 of dHCK and dCK NOT. The state of the signal values in the two sample and hold cells are compared by the comparator 62 and the results of the comparison are communicated to the timing chip 44 at the next occurrence of the rising edge of the SAR NOT signal, which occurs just after the falling edge of the signal S3 because the falling edge of the SAR NOT signal resets the register 52 and thereby the signal S3, one of its Q outputs, and the fall of the signal S3 (and the REM signal) terminates the SAR NOT signal, which was low, causing it to rise and trigger the flip-flop 380. Thus the new state of the comparator is made available immediately to the timing chip 44. This factor is important because the timing chip 44 has less than one half period of the SCK signal to determine which of the two sample and hold cells has the highest signal value and which of the two to trigger at the next section positions.

At the next section position, number 3, the timing chip retains the higher valued of the two sample and hold cells and triggers the other. This is shown by the first set of dotted lines in Figure 16d and 16e. Depending on the results of this comparison, the timing chip 44 triggers the sample and hold having the lesser valued signal at the next section, number 2. This is shown by the second set of dotted lines in Figures 16d and 16e. This is the fourth sampling in series and the next position number is number 1. At position number 1 the sequence of triggering just described repeats itself, and so on for every position number one until the SFS mode is ended, which occurs when a sector mark has been decoded.

Every time a new higher-valued signal in a section is recognised, exclusive-OR gate 386 issues a negative going LDOS pulse, which lasts for a period of approximately ninety nanoseconds until the next occurrence of the REM signal which corresponds to the next signals S1 or S3. The rising edge of the LDOS pulse clocks the address register 90 which records the state of dCK NOT and dHCK. The then current state of dCK NOT and dHCK is the mod 4 address of the position in which the occurred, plus 1 (+1). (Plus 1 because the rising edge of LDOS occurs one full cycle of SCK after the rise of either the signal S1 or S3 which caused the issuance of the LDOS pulse—see Figure 16f). If no new higher-valued signal is ever recognised, the signal S1, which was triggered at position number 1, contains the highest value. The address +1 of this position is 0, and 0 is the state of the address register outputs because RER NOT signal resets the register at position zero of each section. The location of the sampling of the highest-valued signal corresponds to the location of the mark in the section. Only one mark occurs in a section because the marks are separated by four positions and a section is four positions long.

Referring to the example shown in Figure 16, the first mark of the sector field is shown at field position number four and section position number 3, i.e. both dHCK and dCK NOT are high. The sampling at this position generates a change in the comparator 62 and causes an LDOS pulse to be issued at the rising edge of the SAR NOT signal, when the flip-flop 380 is clocked. LDOS falls. Just prior to the SAR NOT signal, the 2CK clock clocks the register 388 causing dCK NOT to fall. The state of dHCK and dCK NOT is now 10, or 2 mod 4. When LDOS rises because the REM signal has clocked the flip-flop 382, the state of dCK and dHCK remains the same because the rising edge of the 2CK clock is about 40—50 nanoseconds away. Thus the register 390 is clocked and records the address 2.

Because no new higher-valued signal is found in this section, the location of the highest valued-signal just found is the location of the mark. No more LDOS pulses are generated. The RER NOT pulse is issued at position 0 of the next section. The number 2, currently the contents of the address register 390, is clocked into the register 122, a sync register clocked by the RER NOT signal. The RER NOT signal resets the register 390 to a contents of zero to prepare it to record the address of the LDOS pulse, if any, of the current section.

The above sequence is repeated every section while in SFS mode. The mod 4 field position address +1 of the mark or hole is recorded in the sync register 122 at the beginning of the section when the timing chip 44 issues the RER pulse (later inverted by the inverter 50).

At the rise of dHCK, which is fed back to the timing chip 44, the timing chip issues an SPE pulse to clock the sector mark decoder 124. A SPE signal occurs shortly after the RER NOT in each section. (See Figures 6m and 6l). This causes the decoder 124 to load the outputs of the sync register 122, which comprise the address bits, SB0 and SB1 from the address register 390, four count bits on inputs A1 to A4, and a mode bit on A5.

The decoder 124 compares the address bits with one of a plurality of addresses as indexed by the count and mode inputs. If a match is found, the count is increment and placed on the 01 through 04 outputs. If a match is not found, the count outputs are initialised to zero. After all addresses in the sequence indexed by the count and mode have been compared, the decoder 124 issues a sync-pulse-NOT signal which will be discussed shortly.

As previously mentioned, the initial state of the HCK signal relative to the CK clock is indeterminate, and yet its state is highly determinate of the addresses of the marks as recorded by the preceding apparatus. The addresses of the 16 marks are comprised of two sets depending on the initial state of the HCK signal. The sequence compensates for this fact by looking for both sets of addresses. If the address of the initial mark is 2, Figure 14d, the decoder 124 sets its 05 output to zero indicative of zero mode. Thereafter only those addresses in the mode zero sequence are inspected as the count increments. If the initial address is 0, the decoder 124 sets the 05 output to one indicative of mode one. Thereafter, only those addresses in the mode one sequence, Figure 14g, are inspected as the count increases. The mode output is fed back through the sync register 122 to the A5 input of the decoder 124.

In mode 0, the decoder looks for the following sequence:

2 2 2 2 1 1 1 1 ? 0 0 0 0 3 3 3 3.

The question mark is present because the space between marks 392 and 394 is five positions (33 and 38) and the triggering of the sample and holds between the marks occurs at positions 34, 35, 36 and 37 (actually less one), positions in which no hole occurs. Mark 392 at position 33 has the address 1, which is the last address of a section. The next four positions 34, 35, 36 and 37 comprise the next section, but the next mark 394 appears at position 38. Thus, in the section comprised of positions 34 to 37 there is no mark and the results of the comparison of hole related power is indeterminate. Thus the question mark. The decoder is adapted to accept any result and increment the counter during this indeterminate section.

After the decoder 124 has recognised an entire sequence of sector marks, it issues a sync-pulse-NOT signal (-SYNC in the Figure and MARK in Figure 1). This signal is provided to the nibble counter 126 (Figure 1) to reset it, to the mode select 136 (Figure 1) to reset SFS mode, to the NAND gate 48 to temporarily disable it, and to the load control of the counter 46. The count loaded is either a one or a 2 depending upon the state of the MODE bit output from the decoder 124. The count 1 input is latched high, the count 4 and the count 8 inputs are latched low, while the count 2 input is latched to the 05 MODE output of the decoder 124 through the sync register 122. The reason that the count 2 input of the counter 46 copies the state of the MODE bit from the decoder 124 is that the sync-pulse-NOT is issued at the first SPE pulse after the decoding sequence has been completed. SPE is issued at the rise of dHCK, which can have two states. Thus the time within the first symbol, after the sector mark field that the sync-pulse-NOT signal is issued is determined by the HCK signal. From inspection of Figures 14c, 14e and 14f, 14h and 14i, it can be seen that in mode zero, the sync pulse is issued at symbol position number zero. At the next 2CK clock rising edge, which clocks the counter 46 to load the count on its count inputs, the count should be 1. The count 1 input to the counter is latched high and the state of the mode bit is zero. Thus the counter 46 correctly loads a count of 1. In mode one, the sync pulse is issued at symbol position number two. At the next 2CK clock rising edge, which clocks TOON counter 46 to load the count on its count inputs, the count should be 3. The count 1 input to the counter is latched high and the state of the mode bit is one. Thus the counter 46 correctly loads a count of 3.

At a count of 8 from the counter, TNC3, after having received the sync pulse NOT, the nibble counter 126 resets to zero, whereupon it counts up by one each symbol until reaching its next predetermined count and again causes the mode select 136 to issue the SFS signal.

**Claims**

1. Apparatus for reading data from a medium, in particular an optical recording apparatus, comprising means for reading data from the medium, which data has been recorded on the medium in fixed block format comprising symbols having a predetermined number, $2(n-1)$, of recording marks, half written in even positions and half written in odd positions, the reading means being adapted to generate read signals corresponding with the symbols read, differential decoding means responsive to the read signals for decoding the data read, the apparatus being characterized in that the decoding means comprise symbol counting means (46) for counting the symbol positions of the symbols read, including means (122, 124) for initializing said symbol counter means (46) after reaching the count of the last symbol position of the symbol read, $n$ even sample and hold cells (114) and $n$ odd sample and hold cells (114); means (44) responsive to said symbol counter means (46) for triggering a first of said $n$ even sample and hold cells (114) at the first even symbol position of a symbol; means (44) responsive to said symbol counter means (46) for triggering successive others of said $n$ even sample and hold cells at successive even symbol positions of a symbol, the number of successive cells triggered corresponding to the number, $n-1$, of recording marks which may be written in even positions; $n(n-1)/2$ even comparator means (62) for comparing each even sample and hold cell value ($S_1$, $S_3$) with each of the other even sample and hold cell values ($S_3$, $S_1$); means (74) responsive to said symbol counter means (46) and to said even comparator means (62) for retaining the values in the even sample and hold cells (114) having the higher values and for triggering the even sample and hold cell having the lowest value at the next even symbol position and for repeating said retention and said triggering of the even sample and hold cell having the lowest value at the occurrence of every even symbol position for which the fixed-block code may contain a recording mark; means (44) responsive to said symbol counter means (46) for triggering successive others of said $n$ odd sample and hold cells at successive odd symbol positions of a symbol, the number of cells triggered corresponding to the number, $\eta-1$, of recording marks which may be written in odd positions; $n(n-1)/2$ odd comparator means (64) for comparing the each odd sample and hold cell value ($S_2$, $S_4$) with each of the other odd sample and hold cell values ($S_4$, $S_2$) and means (75) responsive to said symbol counter means (46) and to said odd comparator means (64) for retaining the values in the odd sample and hold cells having the higher values and for triggering the odd sample and hold cell having the lowest value at the next odd symbol position and for repeating said retention and said triggering of the odd sample and hold cell having the lowest value at the occurrence of every odd symbol position for which the fixed-block code may contain a recording mark, and means (36) for deriving the decoded data from the outputs of the odd and even comparator means (64).

2. Apparatus as claimed in Claim 1, characterized in that the means for deriving the decoded data include n(n−1)/2 even binary register means (76), one for each of said even comparator means (62) and responsive to said one of said even comparator means, for recording the counts of said symbol counter means (46) divided by two, ignoring fractions, when said one of said even comparator means indicates the detection of a new higher valued in one of the sample and holds to which it is connected; n(n−1)/2 odd binary register means (76), one for each of said odd comparator means, for recording the counts of said symbol counter means (46) divided by two, ignoring fractions, when said one of said odd comparator means indicates the detection of a new higher valued in one of the sample and holds to which it is connected; even decoder means, responsive to said even comparator means (62) and to said even binary register means (76), for determining which of the binary register means contains the addresses of the recording marks and for decoding these addresses into binary at the end of a symbol; odd decoder means, responsive to said odd comparator means (64) and to said odd binary register means (76), for determining which of the binary register means contains the addresses of the recording marks and for decoding these addresses into binary at the end of a symbol.

3. Apparatus as claimed in Claim 2, characterized in that said binary register means (76) includes address means for latching the binary count of said symbol counter means excluding the lowest order bit of the count in response to the lowest order bit of the count.

4. Apparatus as claimed in any of Claims 1 to 3, characterized in that each of said means responsive to said symbol counter means for triggering an odd or even sample and hold cell at any position of a symbol includes timing means (44) for triggering said odd or even sample and hold cell during the first half of the symbol positions and terminating the triggering shortly after the first half of the symbol position.

5. Apparatus as claimed in Claim 1, characterized in that n is equal to 2.

6. Apparatus as claimed in Claim 5, characterized by even binary register means (76) responsive to a change in the state of said even comparator means output for recording the count of said symbol counter means divided by two, ignoring fractions, odd binary register means (76) responsive to a change in the state of said odd comparator means output for recording the count of said symbol counter means (46) divided by two, ignoring fractions; output register means (120) for loading the contents of said even and said odd binary register means into at least one output register at the end of a symbol.

7. Apparatus as claimed in Claim 6, characterized in that said output register means (120) includes means for loading the contents of said binary register means (76) into alternate ones of two output registers at alternate symbols.

8. Apparatus as claimed in Claim 3, characterized by including means for reading the contents of said output register means (120) every other symbol and for resetting both of said output registers.

9. Apparatus as claimed in any Claims 6 to 8, characterized in that said even comparator means (62) includes an even latch for holding the state of the even comparator means and means for triggering the even latch at every occurrence of the triggering of one of said odd sample and hold cells.

10. Apparatus as claimed in any of Claims 6 to 9, characterized in that said odd comparator means (64) includes an odd latch for holding the state of the odd comparator means and means for triggering the odd latch at every occurrence of the triggering of one of said even sample and hold cells.

11. Apparatus as claimed in any of Claims 6 to 10, characterized in that said binary register means (76) includes address means for latching the binary count of said symbol counter means (46) excluding the lowest and highest order bit of the count in response to the lowest order bit of the count.

12. Apparatus as claimed in Claim 9, characterized in that said even binary register means (76) includes even retaining means for retaining the state of the output of said even latch for one symbol position and means (78) for exclusive-ORing the output of the even latch with the retained even latch output contained in the even retaining means.

13. Apparatus as claimed in Claim 10, characterized in that said odd binary register means (76) includes odd retaining means for retaining the state of the output of said odd latch for one symbol position and means (80) for exclusive-ORing the output of the odd latch with the retained odd latch output contained in the odd latch with the retained odd latch output contained in the odd retaining means.

14. Apparatus as claimed in any of Claims 6 to 13, characterized in that each of said means responsive to said symbol counter means for triggering an odd or even sample and hold cell at any position of a symbol includes timing means (44) for triggering said odd or even sample and hold cell during the first half of the symbol position and terminating the triggering shortly after the first half of the symbol position.

15. Apparatus as claimed in Claim 1, characterized by means for writing recording marks on the surface of the medium in response to write pulses, means (107) responsive to a write pulse for generating a delayed signal indicative of the write pulse, the length of delay being a predetermined time; means (108) responsive to said delayed signal for terminating the triggering of the even or odd sample and hold cell currently being triggered by any of said means responsive to said symbol counter means for triggering an odd or an even sample and hold cell; n(n−1)/2 even write verify register means (132), each responsive to said delayed signal and to one of said even comparator means (62), for generating a correct even write signal in response to the simultaneous occurrence of said second delayed signal and an indication from the even comparator means of the detection of a newer higher value in one of the two sample and holds to which it is connected; n(n−1)/2 odd write verify register means (132), each responsive to said delayed signal and to one of said odd comparator means (64), for generating a correct odd write signal in response to the simultaneous occurrence of said second delayed signal and an indication from the odd comparator means of the detection of a newer higher value in one of the two sample and holds to which it is connected.

16. Apparatus as claimed in Claim 15, characterized by including even multiplexer means (89), responsive to said even comparator means, for determining which of said even write verify register means was triggered in response to the detection of one of the n−1 highest values and for placing the on outputs the state of the selected registers; odd multiplexer means (91), responsive to said odd comparator means, for determining which of said odd write verify register means was triggered in response to the detection of one of the n−1 highest values and for placing the on outputs the state of the selected registers; means (109) responsive to said even and odd multiplexer means for determining whether all of said selected register state indicate the simultaneous occurrence of a write pulse.

17. Apparatus as claimed in Claim 15 or 16, characterized in that said even comparator means (62) includes even latch means for holding the state of even comparator means and further including means for triggering the each of said even latch means at every occurrence of the triggering of one of said odd sample and hold cells.

18. Apparatus as claimed in any of Claims 15 to 17, characterized in that said odd comparator means (64) includes odd latch means for holding the state of the odd comparator means and further including means for triggering each of said odd latch means at every occurrence of the triggering of one of said even sample and hold cells.

19. Apparatus as claimed in Claim 16, characterized by including means (76) connected to each of said even latch means for determining that the state of the even latch means has changed including even retaining means for retaining the state of said even latch means for one symbol position and means for exclusive-ORing (78) the state of the even latch means with the retained state of said even latch means contained in the even retaining means.

20. Apparatus as claimed in Claim 18, characterized by including means (76) connected to each of said odd latch means for determining that the state of the odd latch means has changed including odd remaining means for retaining the state of said odd latch means for one symbol position and means (80) for exclusive-ORing the state of the odd latch means with the retained state of said odd latch means contained in the odd retaining means.

21. Apparatus as claimed in any of Claims 15 to 20, characterized in that each of said means responsive to said symbol counter means (46) for triggering an odd or an even sample and hold cell and hold cell during the second half of the symbol position.

22. Apparatus as claimed in any of Claims 15 to 21, characterized in that said means (122, 124) for initializing said first even and odd sample and hold cells comprises means responsive to said symbol counter means (46) for triggering a first of both said n even and n odd sample and hold cells during that symbol position which is constrained to never have a recording mark written in it.

23. Apparatus as claimed in Claim 15, characterized in that n is equal to 2 and in that the apparatus is provided with means (132) for initializing an error register to a correct write state and with means responsive to the absence of occurrence of either of said even and said odd correct write signals at the end of a symbol for changing the state of said error·register to an incorrect write state.

24. Apparatus as claimed in Claim 23, characterized in that said even comparator means (62) includes an even latch for holding the state of the even comparator means and means for triggering the even latch at every occurrence of the triggering of one of said odd sample and hold cells.

25. Apparatus as claimed in Claim 23 or 24, characterized in that said odd comparator means (64) includes an odd latch for holding the state of the odd comparator means and means for triggering the odd latch at every occurrence of the triggering of one of said sample and hold cells.

26. Apparatus as claimed in Claim 24 or 25, characterized by including means (76) for determining that the even comparator output has changed including even retaining means for retaining the state of the output of said even latch for one symbol position and means (78) for exclusive-ORing the output of the even latch with the retained even latch output contained in the even retaining means.

27. Apparatus as claimed in Claim 25 or 26, characterized by including means (76) for determining that the odd comparator output has changed including odd retaining means for retaining the state of the output of said odd latch for one symbol position and means (80) for exclusive-ORing the output of the odd latch with the retained odd latch output contained in the odd latch with the retained odd latch output contained in the odd retaining means.

28. Apparatus as claimed in any of claims 23 to 27, characterized in that each of said means responsive to said symbol counter means for triggering an odd or even sample and hold cell at any position of a symbol includes timing means (44) for triggering said odd or even sample and hold cell during the second half of the symbol position.

29. Apparatus as claimed in any of Claims 23 to 28, characterized in that said means for initializing said first even and odd sample and hold cells comprises means responsive to said symbol counter means (46) for triggering a first of both said even and said odd pairs of sample and hold cells every symbol during that symbol position which is constrained to never have a recording mark written in it.

**Patentansprüche**

1. Gerät zum Lesen von Daten aus einem Medium, insbesondere einem optischen Aufzeichnungsgerät, mit Mitteln zum Lesen von Daten aus dem Medium, die auf dem Medium in festem Blockformat aufgezeichnet wurden, wobei dieses Blockformat Symbole mit einer vorgegebenen Anzahl von 2(n−1) Aufzeichnungsmarkierungen enthält, die zur Hälfte an geradzahligen Stellen und zur Hälfte an ungeradzahligen Stellen geschrieben wurden, wobei die Lesemittel zum Erzeugen von Lesesignalen entsprechend den gelesenen Symbolen ausgelegt sind, und mit auf die Lesesignale zum Decodieren der gelesenen Daten ansprechenden, differentiellen Decodermitteln, dadurch gekennzeichnet, daß die Decodermittel einen Symbolzähler (46) zum Zählen der Symbolstellen der gelesenen Symbole, Mittel (122, 124) zum Aktivieren des Symbolzählers (46) beim Erreichen der Zählung der letzten Symbolstelle des gelesenen Symbols, n geradzahlige Abtast-und-Halte-Zellen (114) und n ungeradzahlige Abtast-und-Halte-Zellen (114), auf den Symbolzähler (46) ansprechende Mittel (44) zum Beaufschlagen einer ersten der n geradzahligen Abtast-und-Halte-Zellen (114) bei der ersten geradzahligen Symbolstelle eines Symbols, auf den Symbolzähler (46) ansprechende Mittel (44) zum Beaufschlagen aufeinanderfolgender anderer der n geradzahligen Abtast-und-Halte-Zellen bei aufeinanderfolgenden geradzahligen Symbolstellen eines Symbols, wobei die Anzahl beaufschlagter aufeinanderfolgender Zellen der Anzahl von n−1 Aufzeichnungsmarkierungen entsprechen, die an geradzahligen Stellen geschrieben sein können, n(n−1)/2 geradzahlige Komparatoren (62) zum Vergleichen jedes geradzahligen Abtast-und-Haltezellenwerts (S1, S3) mit jedem der anderen Abtast-und-Halte-Zellenwerte (S3, S1), auf den Symbolzähler (46) und auf die geradzahligen Komparatoren (62) ansprechende Mittel (74) zum Festhalten der Werte in den die höheren Werte habenden geradzahligen Abtast-und-Halte- Zellen (114) und zum Beaufschlagen der den niedrigsten Wert habenden geradzahligen Abtast-und-Halte-Zelle an der folgenden geradzahligen Symbolstelle und zum Wiederholen dieses Festhaltens und dieser Beaufschlagung der geradzahligen Abtast-und-Haltezelle mit dem niedrigsten Wert beim Erscheinen jeder geradzahlige Symbolstelle, für die der Festblockcode eine Aufzeichnungsmarkierung enthalten kann, auf den Symbolzähler (46) ansprechende Mittel (44) zum Beaufschlagen aufeinanderfolgender anderer der n ungeradzahligen Abtast-und-Halte-Zellen bei aufeinanderfolgenden ungeradzahligen Symbolstellen eines Symbols, wobei die Anzahl beaufschlagter Zellen der Anzahl von n−1 Aufzeichnungsmarkierungen entsprechen, die an ungeradzahligen Stellen geschrieben sein können, n(n−1)/2 ungeradzahlige Komparatoren (64) zum Vergleichen jedes geradzahligen Abtast-und-Haltezellenwerts (S2, S4) mit jedem der anderen Abtast-und-Halte-Zellenwerte (S4, S2), auf den Symbolzähler (46) und auf die geradzahligen Komparatoren (64) ansprechende Mittel (75) zum Festhalten der Werte in den die höheren Werte habenden ungeradzahligen Abtast-und-Halte-Zellen (114) und zum Beaufschalgen der den niedrigsten Wert habenden ungeradzahligen Abtast-und-Halte-Zelle an der folgenden ungeradzahligen Symbolstelle und zum Wiederholen dieses Festhaltens und dieser Beaufschlagung der ungeradzahligen Abtast-und-Haltezelle mit dem niedrigsten Wert beim Erscheinen jeder ungeradzahligen Symbolstelle, für die der Festblockcode eine Aufzeichnungsmarkierung enthalten kann, und Mittel (36) zum Ableiten der decodierten Daten aus den Ausgängen der ungeradzahligen und geradzahligen Komparatoren (64) enthalten.

2. Gerät nach Anspruch 1, dadurch gekennzeichnet, daß die Mittel zum Ableiten der decodierten Daten n(n−1)/2 geradzahlige Binärregister (76) für je einen der geradzahligen Komparatoren (62), die auf je einen der geradzahligen Komparatoren ansprechen, zum Aufzeichnen der halbierten Zählungen des Symbolzählers (46), wobei Bruchteile unberücksichtigt bleiben, wenn einer der geradzahligen Komparatoren die Detektion eines neuen höher bewerteten in einer der Abtast-und-Haltezellen anzeigt, mit der es verbunden ist, n(n−1)/2 ungeradzahlige Binärregister (76) für je einen der ungeradzahligen Komparatoren zum Aufzeichnen der halbierten Zählungen der Symbolzähler (46), wobei Bruchteile unberücksichtigt bleiben, wenn einer der ungeradzahligen Komparatoren die Detektion eines neuen höher bewerteten in einer der Abtast-und-Haltezellen anzeigt, mit der es verbunden ist, geradzahlige Decodermittel, die auf geradzahlige Komparatoren (62) und auf die geradzahligen Binärregister (76) ansprechen, um festzustellen, welches der Binärregister die Adressen der Aufzeichnungsmarkierungen enthält, und zum Decodieren dieser Adressen in einen Binärwert am Ende eines Symbols, und ungeradzahlige Decoder enthalten, die auf ungeradzahlige Komparatoren (64) und auf die ungeradzahlige Binärregister (76) ansprechen, um festzustellen, welches der Binärregister die Adressen der Aufzeichnungsmarkierungen enthält, und zum Decodieren dieser Adressen in einen Binärwert am Ende eines Symbols.

3. Gerät nach Anspruch 2, dadurch gekennzeichnet, daß das Binärregister (76) Adreßmittel zum Verriegeln der Binärzählung des Symbolzählers unter Ausschluß des Bits der Zählung mit niedrigster Bitwertigkeit in Beantwortung des Bits der Zählung mit niedrigster Bitwertigkeit enthält.

4. Gerät nach einem der Ansprüche 1 bis 3, dadurch gekennzeichnet, daß jedes der auf den Symbolzähler ansprechenden Mittel zum Beaufschalgen einer ungeradzahligen oder geradzahligen Abtast-und-Haltezelle an einer beliebigen Stelle eines Symbols Zeitsteuermittel (44) zum Beaufschlagen der ungeradzahligen oder geradzahligen Abtast-und-Haltezelle während der ersten Hälfte der Symbolstellen und zum Beenden der Beaufschlagung kurz nach der ersten Hälfte der Symbolstelle enthält.

5. Gerät nach Anspruch 1, dadurch gekennzeichnet, daß n gleich 2 ist.

6. Gerät nach Anspruch 5, dadurch gekennzeichnet, daß geradzahlige Binärregister (76), die auf eine Änderung im Zustand des geradzahligen Komparatorausgangs zum Aufzeichnen der halbierten Zählung der Symbolzähler ansprechen, wobei Bruchteile unberücksichtigt bleiben, ungeradzahlige Binärregister (76), die auf eine Änderung im Zustand des ungeradzahligen Komparatorausgangs zum Aufzeichnen der halbierten Zählung der Symbolzähler (46) ansprechen, wobei Bruchteile unberücksichtigt bleiben, und Ausgangsregister (120) zum Laden der Inhalte der geradzahligen und der ungeradzahligen Binärregister in wenigstens ein Ausgangsregister am Ende eines Symbols vorgesehen sind.

7. Gerät nach Anspruch 6, dadurch gekennzeichnet, daß das Ausgangsregister (120) Mittel zum abwechselnden Laden des Inhalts der Binärregister (76) abwechselnd in eines der beiden Ausgangsregister bei abwechselnden Symbolen enthält.

8. Gerät nach Anspruch 3, dadurch gekennzeichnet, daß Mittel zum Lesen des Inhalts des Ausgangsregisters (120) bei jedem zweiten Symbol und zum Rückstellen der beiden Ausgangsregister vorgesehen sind.

9. Gerät nach einem der Ansprüche 6 bis 8, dadurch gekennzeichnet, daß der geradzahlige Komparator (62) eine geradzahlige Verriegelung zum Festhalten des Zustands des geradzahligen Komparators und Mittel zum Beaufschlagen der geradzahligen Verriegelung bei jedem Erscheinen der Beaufschlagung einer der ungeradzahligen Abtast-und-Haltezellen enthält.

10. Gerät nach einem der Ansprüche 6 bis 9, dadurch gekennzeichnet, daß der ungeradzahlige Komparator (64) eine ungeradzahlige Verriegelung zum Festhalten des Zustands des ungeradzahligen Komparators und Mittel zum Beaufschlagen der ungeradzahligen Verriegelung bei jedem Erscheinen der Beaufschlagung einer der ungeradzahligen Abtast-und-Haltezellen enthält.

11. Gerät nach einem der Ansprüche 6 bis 10, dadurch gekennzeichnet, daß das Binärregister (76) Adreßmittel zum Verriegeln der Binärzählung des Symbolzählers (46) unter Ausschluß der Bits der Zählung mit niedrigster und höchster Bitwertigkeit in Beantwortung des Bits der Zählung mit niedrigster Bitwertigkeit enthält.

12. Gerät nach Anspruch 9, dadurch gekennzeichnet, daß das geradzahlige Binärregister (76) geradzahlige Haltemittel zum Festhalten des Zustands des Ausgangs der geradzahligen Verriegelung für nur eine Symbolstelle und Mittel (78) zum Bilden der Exklusiv-ODER-Funktion des Ausgangs der geradzahligen Verriegelung enthält, wobei sich der festgehaltene geradzahlige Verriegelungsausgang im geradzahligen Haltemittel befindet.

13. Gerät nach Anspruch 10, dadurch gekennzeichnet, daß das ungeradzahlige Binärregister (76) ungeradzahlige Haltemittel zum Festhalten des Zustands des Ausgangs der ungeradzahligen Verriegelung für nur eine Symbolstelle und Mittel (80) zum Bilden der Exklusiv-ODER-Funktion des Ausgangs der ungeradzahligen Verriegelung enthält, wobei sich der festgehaltene ungeradzahlige Verriegelungsausgang im ungeradzahligen Haltemittel befindet.

14. Gerät nach einem der Ansprüche 6 bis 13, dadurch gekennzeichnet, daß jedes der auf den Symbolzähler ansprechenden Mittel zum Beaufschlagen einer ungeradzahligen oder geradzahligen Abtast-und-Haltezelle an einer beliebigen Stelle eines Symbols Zeitsteuermittel (44) zum Beaufschlagen der ungeradzahligen oder geradzahligen Abtast-und-Haltezelle während der ersten Hälfte der Symbolstelle und zum Beenden der Beaufschlagung kurz nach der ersten Hälfte der Symbolstelle enthält.

15. Gerät nach Anspruch 1, dadurch gekennzeichnet, daß darin Mittel zum Schreiben von Aufzeichnungsmarkierungen auf der Oberfläche des Mediums beim Empfang von Schreibimpulsen, ein auf einen Schreibimpuls zum Erzeugen eines verzögerten Signals ansprechendes Mittel, wobei das verzögerte Signal den Schreibimpuls darstellt und die Länge der Verzögerung eine vorgegebene Dauer hat, ein auf das verzögerte Signal ansprechendes Mittel (108) zum Beenden der Beaufschlagung der geradzahligen oder ungeradzahligen Abtast-und-Haltezelle, die durch eines der auf den Symbolzähler ansprechenden Mittel zum Beaufschlagen einer ungeradzahligen oder geradzahligen Abtast-und-Haltezelle laufend beaufschlagt wird, $n(n-1)/2$ geradzahlige Schreibprüfregister (132), die je auf das verzögerte Signal und auf eines der geradzahligen Komparatoren (62) ansprechen, um ein richtiges geradzahliges Schreibsignal in Beantwortung des gleichzeitigen Erscheinens des zweiten verzögerten Signals und einer aus dem geradzahligen Komparator empfangenen Anzeige der Detektion eines neueren höheren Werts in einer der beiden Abtast-und-Haltezellen zu erzeugen, an die es angeschlossen ist, und n(n−1)/2 ungeradzahlige Schreibprüfregister (132) vorgesehen sind, die je auf das verzögerte Signal und auf eines der ungeradzahligen Komparatoren (64) ansprechen, um ein richtiges ungeradzahliges Schreibsignal in Beantwortung des gleichzeitigen Erscheinens des zweiten verzögerten Signals und einer aus dem ungeradzahligen Komparator empfangenen Anzeige der Detektion eines neueren höheren Werts in einer der beiden Abtast-und-Haltezellen zu erzeugen, an die es angeschlossen ist.

16. Gerät nach Anspruch 15, dadurch gekennzeichnet, daß darin auf die geradzahligen Komparatoren ansprechende geradzahlige Multiplexer (89), die feststellen, welches der geradzahligen Schreibprüfregister in Beantwortung der Detektion eines der n−1 höchsten Werte beaufschlagt wurde, und die die Ausgänge in den Zustand der ausgewählten Register versetzen, auf die ungeradzahligen Komparatoren ansprechende ungeradzahlige Multiplexer (91), die feststellen, welches der ungeradzahligen Schreibprüfregister in Beantwortung der Detektion eines der n−1 höchsten Werte beaufschlagt wurde, und die die Ausgänge in den Zustand der ausgewählten Register versetzen, und auf die geradzahligen und ungeradzahligen Multiplexer ansprechende Mittel (109) zum Bestimmen vorgesehen sind, ob alle der ausgewählten Register den Zustand des gleichzeitigen Erscheinens eines Schreibimpulses anzeigen.

17. Gerät nach Anspruch 15 oder 16, dadurch gekennzeichnet, daß der geradzahlige Komparator (62) geradzahlige Verriegelungsmittel zum Festhalten des Zustands des geradzahligen Komparators und weiter Mittel zum Beaufschlagen jedes der geradzahligen Verriegelungsmittel bei jedem Erscheinen der Beaufschlagung einer der ungeradzahligen Abtast-und-Haltezellen enthält.

18. Gerät nach Anspruch 15 bis 17, dadurch gekennzeichnet, daß der ungeradzahlige Komparator (64) ungeradzahlige Verriegelungsmittel zum Festhalten des Zustands des ungeradzahligen Komparators und weiter Mittel zum Beaufschlagen jedes der ungeradzahligen Verriegelungsmittel bei jedem Erscheinen der Beaufschlagung einer der geradzahligen Abtast-und-Haltezellen enthält.

19. Gerät nach Anspruch 16, dadurch gekennzeichnet, daß Mittel (76) vorgesehen sind, die an jedes der geradzahligen Verriegelungsmittel zum Bestimmen einer Änderung im Zustand der geradzahligen Verriegelungsmittel angeschlossen sind und geradzahlige Haltemittel zum Festhalten des Zustands der geradzahligen Verriegelungsmittel für eine Symbolstelle und Mittel zur Bildung der Exklusiv-ODER-Funktion (78) des Zustands der geradzahligen Verriegelungsmittel mit dem festgehaltenen Zustand der geradzahligen Verriegelungsmittel im geradzahligen Haltemittel enthalten.

20. Gerät nach Anspruch 18, dadurch gekennzeichnet, daß Mittel (76) vorgesehen sind, die an jedes der ungeradzahligen Verriegelungsmittel zum Bestimmen einer Änderung im Zustand der ungeradzahligen Verriegelungsmittel angeschlossen sind und ungeradzahlige restliche Mittel zum Festhalten des Zustands der ungeradzahligen Verriegelungsmittel für eine Symbolstelle sowie Mittel zur Bildung der Exklusiv-ODER-Funktion (78) des Zustands der ungeradzahligen Verriegelungsmittel mit dem festgehaltenen Zustand der ungeradzahligen Verriegelungsmittel im ungeradzahligen Haltemittel enthalten.

21. Gerät nach einem der Ansprüche 15 bis 20, dadurch gekennzeichnet, daß jedes der auf den Symbolzähler (46) ansprechenden Mittel zum Beaufschlagen einer ungeradzahligen und einer geradzahligen Abtast-und-Haltezelle in der zweiten Hälfte der Symbolstelle.

22. Gerät nach einem der Ansprüche 15 bis 21, dadurch gekennzeichnet, daß das Mittel (122, 124) zum Aktivieren der geradzahligen und ungeradzahligen Abtast-und-Haltezellen auf den Symbolzähler (46) ansprechende Mittel zum Beaufschlagen einer ersten der beiden n geradzahligen und n ungeradzahligen Abtsat-und-Haltezellen für die Dauer der Symbolstelle enthält, die darauf beschränkt ist, daß nie eine Aufzeichnungsmarkierung darin geschrieben wird.

23. Gerät nach Anspruch 15, dadurch gekennzeichnet daß n gleich 2 ist und im Gerät Mittel (132) zum Aktivieren eines Fehlerregisters in einem richtigen Schreibzustand und Mittel vorgesehen sind, die bei Nichterscheinen eines der geradzahligen und ungeradzahligen richtigen Schreibsignale am Ende eines Symbols zum Ändern des Zustands des Fehlerregisters nach einem unrichtigen Schreibzustand ansprechen.

24. Gerät nach Anspruch 23, dadurch gekennzeichnet, daß der geradzahlige Komparator (62) eine geradzahlige Verriegelung zum Festhalten des Zustands des geradzahligen Komparators und Mittel zum Beaufschlagen der geradzahligen Verriegelung bei jedem Erscheinen der Beaufschlagung einer der ungeradzahligen Abtast-und-Haltezellen enthält.

25. Gerät nach Anspruch 23 oder 24, dadurch gekennzeichnet, daß der ungeradzahlige Komparator (64) eine ungeradzahlige Verriegelung zum Festhalten des Zustands des ungeradzahligen Komparators und Mittel zum Beaufschlagen der ungeradzahligen Verriegelung bei jedem Erscheinen der Beaufschlagung der einen der (geradzahligen????) Abtast-und-Haltezellen enthält.

26. Gerät nach Anspruch 24 oder 25, dadurch gekennzeichnet, daß darin Mittel (76) zum Feststellen einer Änderung im geradzahligen Komparatorausgang mit geradzahligen Haltemitteln zum Festhalten des Zustands des Ausgangs der geradzahligen Verriegelung für eine Symbolstelle und Mittel (78) zum Bilden der Exklusiv-ODER-Funktion des Ausgangs der geradzahligen Verriegelung mit dem festgehaltenen geradzahligen Verriegelungsausgang im geradzahligen Haltemittel vorgesehen sind.

27. Gerät nach Anspruch 25 oder 26, dadurch gekennzeichnet, daß darin Mittel (76) zum Feststellen einer Änderung im ungeradzahligen Komparatorausgang mit ungeradzahligen Haltemitteln zum Festhalten des Zustands des Ausgangs der ungeradzahligen Verriegelung für eine Symbolstelle und Mittel (80) zur Bildung der Exklusiv-ODER-Funktion des Ausgangs der ungeradzahligen Verriegelung mit dem festgehaltenen ungeradzahligen Verriegelungsausgang in der ungeradzahligen Verriegelung mit dem festgehaltenen ungeradzahligen Verriegelungsausgang im ungeradzahligen Haltemittel vorgesehen sind.

28. Gerät nach Anspruch 23 bis 27, dadurch gekennzeichnet, daß jedes der auf den Symbolzähler ansprechenden Mittel zum Beaufschlagen einer ungeradzahligen oder geradzahligen Abtast-und-Haltezelle an einer Stelle eines Symbols Zeitsteuermittel (44) zum Beaufschlagen der ungeradzahligen oder geradzahligen Abtast-und-Haltezelle für die Dauer der zweiten Hälfte der Symbolstelle enthält.

29. Gerät nach Anspruch 23 bis 28, dadurch gekennzeichnet, daß das Mittel zum Aktivieren der ersten geradzahligen und ungeradzahligen Abtast-und-Haltezellen auf den Symbolzähler (46) ansprechende Mittel zum Beaufschlagen eines ersten der beiden geradzahligen und der ungeradzahligen Paare von Abtast-und-Haltezellen jedes Symbol für die Dauer der Symbolstelle enthält, die darauf beschränkt ist, daß nie eine Aufzeichnungsmarkierung darin geschrieben wird.

**Revendications**

1. Appareil pour lire des données sur un support, notamment un appareil d'enregistrement optique, comportant des moyens pour lire des données sur le support, données qui ont été enregistrées sur le support dans un format de bloc fixe comportant des symboles ayant un nombre prédéterminé, $2(n-1)$, de marques d'enregistrement enregistrées, moitié dans des positions paires et moitié dans des positions impaires, les moyens de lecture étant conçus pour engendrer des signaux de lecture correspondant aux symboles lus, des moyens de décodage différentiels réagissant aux signaux de lecture pour décoder les données lues, l'appareil étant caractérisé en ce que les moyens de décodage comportent des moyens de comptage de symboles (46) pour compter les positions de symbole des symboles lus, munis de moyens (122, 124) pour initialiser lesdits moyens de comptage de symboles (46) après que la position de comptage correspondant à la dernière position de symbole du symbole lu a été atteinte, $n$ cellules paires d'échantillonnage et de maintien (114) et $n$ cellules impaires d'échantillonnage et de maintien (114); des moyens (44) réagissant auxdits moyens de comptage de symboles (46) pour déclencher une première desdites $n$ cellules paires (114) d'échantillonnage et de maintien dans la première position de symbole paire d'un symbole; des moyens (44) réagissant auxdits moyens de comptage de symboles (46) pour déclencher d'autres cellules successives parmi lesdites $n$ cellules paires d'échantillonnage et de maintien dans des positions de symbole paires successives d'un symbole, le nombre de cellules successives déclenchées correspondant au nombre, $n-1$, de marques d'enregistrement pouvant être enregistrées dans des positions paires; $n(n-1)/2$ moyens comparateurs pairs (62) pour comparer chaque valeur de cellule paire d'échantillonnage et de maintien ($S_1$, $S_3$) avec chacune des autres valeurs de cellules paires d'échantillonnage et de maintien ($S_3$, $S_1$); des moyens (74) réagissant auxdits moyens de comptage de symboles (46) et auxdits moyens comparateurs pairs (62) pour retenir les valeurs dans les cellules paires d'échantillonnage et de maintien (114) ayant les valeurs les plus élevées et pour déclencher la cellule paire d'échantillonnage et de maintien ayant la valeur la plus basse dans la position de symbole paire suivante et pour répéter ladite retenue et ledit déclenchement de la cellule paire d'échantillonnage et de maintien ayant la valeur la plus basse lors de l'apparition de chaque position de symbole paire pour laquelle le code de bloc fixe peut contenir une marque d'enregistrement; des moyens (44) réagissant auxdits moyens de comptage de symboles (46) pour déclencher d'autres cellules successives parmi lesdites $n$ cellules impaires d'échantillonnage et de maintien dans des positions de symbole impaires successives d'un symbole, le nombre de cellules déclenchées correspondant au nombre, $n-1$, de marques d'enregistrement pouvant être enregistrées dans des positions impaires; $n(n-1)/2$ moyens comparateurs impairs (64) pour comparer chaque valeur de cellule impaire d'échantillonnage et de maintien ($S_2$, $S_4$) avec chacune des autres valeurs de cellules impaires d'échantillonnage et de maintien ($S_4$, $S_2$) et des moyens (75) réagissant auxdits moyens de comptage de symboles (46) et auxdits moyens comparateurs impairs (64) pour retenir les valeurs dans les cellules impaires d'échantillonnage et de maintien ayant les valeurs les plus élevées et pour déclencher la cellule impaire d'échantillonnage et de maintien ayant la valeur plus basse dans la position de symbole impaire suivante et pour répéter ladite retenue et ledit déclenchement de la cellule impaire d'échantillonnage et de maintien ayant la valeur la plus basse lors de l'apparition de chaque position de symbole impaire pour laquelle le code de bloc fixe peut contenir une marque d'enregistrement, et des moyens (36) pour déduire les données décodées des sorties des moyens comparateurs impairs et pairs (64).

2. Appareil selon la revendication 1, caractérisé en ce que les moyens pour déduire les données décodées comportent $n(n-1)/2$ moyens à registre binaire pair (76) correspondant chacun à l'un desdits moyens comparateurs pairs (62) et réagissant à celui-ci, pour enregistrer les positions de comptage desdits moyens de comptage de symboles (46) divisées par deux, en ne tenant aucun compte des fractions, lorsque ledit moyen comparateur pair indique la détection d'une nouvelle valeur plus élevée dans l'une des cellules

22

d'échantillonnage et de maintien auxquelles il est relié; n(n−1)/2 moyens à registre binaire impair (76) correspondant chacun à l'un desdits moyens comparateurs impairs, pour enregister les positions de comptage desdits moyens de comptage de symboles (46) divisées par deux, en ne tenant aucun compte des fractions, lorsque ledit moyen comparateur impair indique la détection d'une nouvelle valeur plus élevée dans l'une des cellules d'échantillonnage et de maintien auxquelles il est relié; des moyens décodeurs pairs réagissant auxdits moyens comparateurs pairs (62) et auxdits moyens à registre binaire pair (76), pour déterminer lequel des moyens à registre binaire contient les adresses des marques d'enregistrement et pour décoder ces adresses en binaire à la fin d'un symbole; des moyens décodeurs impairs réagissant auxdits moyens comparateurs impairs (64) et auxdits moyens à registre binaire impair (76), pour déterminer lequel des moyens à registre binaire contient les adresses des marques d'enregistrement et pour décoder ces adresses en binaire à la fin d'un symbole.

3. Appareil selon la revendication 2, caractérisé en ce que lesdits moyens à registre binaire (76) comportent des moyens d'adressage pour maintenir la position de comptage binaire desdits moyens de comptage de symboles à l'exclusion du bit de poids le plus faible de la position de comptage, et cela en réaction au bit de poids le plus faible de la position de comptage.

4. Appareil selon l'une quelconque des revendications 1 à 3, caractérisé en ce que chacun desdits moyens réagissant auxdits moyens de comptage de symboles pour déclencher une cellule impaire ou paire d'échantillonnage et de maintien dans toute position d'un symbole comporte des moyens rythmeurs (44) pour déclencher ladite cellule impaire ou paire d'échantillonnage et de maintien pendant la première moitié des positions de symbole et pour terminer le déclenchement peu de temps après la première moitié de la position de symbole.

5. Appareil selon la revendication 1, caractérisé en ce que n est égal à 2.

6. Appareil selon la revendication 5, caractérisé par des moyens à registre binaire pair (76) réagissant à un changement d'état de la sortie desdits moyens comparateurs pairs pour enregistrer la position de comptage desdits moyens de comptage de symboles divisée par deux, en ne tenant aucun compte des fractions, des moyens à registre binaire impair (76) réagissant à un changement d'état de la sortie desdits moyens comparateurs pairs pour enregistrer la position de comptage desdits moyens de comptage de symboles divisée par deux, en ne tenant aucun compte des fractions, des moyens à registre de sortie (120) pour introduire le contenu desdits moyens à registres binaire pair et impair dans au moins un registre de sortie à la fin d'un symbole.

7. Appareil selon la revendication 6, caractérisé en ce que lesdits moyens à registre de sortie (120) comportent des moyens pour introduire le contenu desdits moyens à registre binaire (76) dans des registres alternés d'entre deux registres de sortie en présence de symboles alternés.

8. Appareil selon la revendication 3, caractérisé en ce qu'il comporte des moyens pour lire le contenu desdits moyens à registre de sortie (120) tous les deux symboles et pour remettre à zéro lesdits deux registres de sortie.

9. Appareil selon l'une quelconque des revendications 6 à 8, caractérisé en ce que lesdits moyens comparateurs pairs (62) comportent, d'une part, une bascule pair pour retenir l'état des moyens comparateurs pairs et, d'autre part, des moyens pour déclencher la bascule paire lors de chaque déclenchement de l'une desdites cellules impaires d'échantillonnage et de maintien.

10. Appareil selon l'une quelconque des revendications 6 à 9, caractérisé en ce que lesdits moyens comparateurs impairs (64) comportent, d'une part, une bascule impaire pour retenir l'état des moyens comparateurs impairs et, d'autre part, des moyens pour déclencher la bascule impaire lors de chaque déclenchement de l'une desdites cellules paires d'échantillonnage et de maintien.

11. Appareil selon l'une quelconque des revendications 6 à 10, caractérisé en ce que lesdits moyens à registre binaire (76) comportent des moyens d'adressage pour maintenir la position de comptage binaire desdits moyens de comptage de symboles (46) à l'exclusion des bits de poids le plus faible et de poids le plus fort de la position de comptage en réaction au bit de poids le plus faible de la position de comptage.

12. Appareil selon la revendication 9, caractérisé en ce que lesdits moyens à registre binaire (76) comportent des moyens de retenue pairs pour retenir l'état de la sortie de ladite bascule paire pour une seule position de symbole et des moyens (78) pour soumettre à une opération OU exclusif la sortie de la bascule paire, la sortie retenue de la bascule paire étant contenue dans les moyens de retenue pairs.

13. Appareil selon la revendication 10, caractérisé en ce que lesdits moyens à registre binaire impair (76) comportent des moyens de retenue impairs pour retenir l'état de la sortie de ladite bascule impaire pour une seule position de symbole et des moyens (80) pour soumettre à la fonction OU exclusif la sortie de la bascule impaire, la sortie retenue de la bascule impaire étant contenue dans les moyens de retenue impairs.

14. Appareil selon l'une quelconque des revendications 6 à 13, caractérisé en ce que chacun desdits moyens réagissant auxdits moyens de comptage de symboles pour déclencher une cellule impaire ou paire d'échantillonnage et de maintien dans toute position d'un symbole comporte des moyens rythmeurs (44) pour déclencher ladite cellule impaire ou paire d'échantillonnage et de maintien pendant la première moitié de la position de symbole et pour terminer le déclenchement peu de temps après la première moitié de la position de symbole.

15. Appareil selon la revendication 1, caractérisé par des moyens pour enregistrer des marques d'enregistrement sur la surface du support en réaction à des impulsions d'enregistrement, des moyens (107) réagissant à une impulsion d'enregistrement pour engendrer un signal retardé indicatif de l'impulsion d'enregistrement, la longueur de retard étant un temps prédéterminé; des moyens (108) réagissant audit signal retardé pour termine le déclenchement de la cellule paire ou impaire d'échantillonnage et de maintien effectué par l'une quelconque desdits moyens réagissant auxdits moyens de comptage de symboles pour déclencher une cellule impaire ou paire d'échantillonnage et de maintien; n(n−1)/2 moyens à registre pair de vérification d'enregistrement (132) réagissant chacun audit signal retardé et à l'un desdits moyens comparateurs pairs (62), pour engendrer un signal d'enregistrement pair correct en réaction à l'apparition simultanée dudit deuxième signal retardé et à une indication par les moyens comparateurs pairs de la détection d'une valeur plus élevée plus récente dans l'une des deux cellules d'échantillonnage et de maintien auxquelles ils sont reliés; n(n−1)/2 moyens à registre impair de vérification d'enregistrement (132) réagissant chacun audit signal retardé et à l'un desdits moyens comparateurs impairs (64), pour engendrer un signal d'enregistrement impair correct en réaction à l'apparition simultanée dudit deuxième signal retardé et d'une indication par les moyens comparateurs impairs de la détection d'une valeur plus élevée plus récente dans l'une des deux cellules d'échantillonnage et de maintien auxquelles ils sont reliés..

16. Appareil selon la revendication 15, caractérisé en ce qu'il comporte des moyens multiplexeurs pairs (89), réagissant auxdits moyens comparateurs pairs, pour déterminer lequel desdits moyens à registre pair de vérification d'enregistrement a été déclenché en réaction à la détection de l'une des n−1 valeurs les plus élevées et pour donner aux sorties l'état des registres choisis; des moyens multiplexeurs impairs (91), réagissant auxdits moyens comparateurs impairs, pour déterminer lequel desdits moyens à registre impair de vérification d'enregistrement a été déclenché en réaction à la détection de l'une des n−1 valeurs les plus élevées et pour donner aux sorties l'état des registres choisis; des moyens (109) réagissant auxdits moyens multiplexeurs pairs et impairs pour déterminer si tous lesdits états de registres choisis indiquent l'apparition simultanée d'une impulsion d'enregistrement.

17. Appareil selon la revendication 15 ou 16, caractérisé en ce que lesdits moyens comparateurs pairs (62) comportent, d'une part, des moyens à bascule paire pour retenir l'état de moyens comparateurs pairs et, d'autre part, des moyens pour déclencher chacun desdits moyens à bascule paire lors de chaque déclenchement de l'une desdites cellules impaires d'échantillonnage et de maintien.

18. Appareil selon l'une quelconque des revendications 15 à 17, caractérisé en ce que lesdits moyens comparateurs impairs (64) comportent, d'une part, des moyens à bascule impaire pour retenir l'état des moyens comparateurs impairs et, d'autre part, des moyens pour déclencher chacun desdits moyens à bascule impaire lors de chaque déclenchement de l'une desdites cellules paires d'échantillonnage et de maintien.

19. Appareil selon la revendication 16, caractérisé en ce qu'il comporte des moyens (76) reliés à chacun desdits moyens à bascule paire pour déterminer que l'état des moyens à bascule paire a changé, des moyens de retenue pairs pour retenir l'état desdits moyens à bascule paire pour l'une des positions de symbole et des moyens pour soumettre à une opération OU exclusif (78) l'état des moyens à bascule paire, l'état retenu desdits moyens à bascule paire étant contenu dans les moyens de retenue pairs.

20. Appareil selon la revendication 18, caractérisé en ce qu'il comporte des moyens (76) reliés à chacun desdits moyens à bascule impaire pour déterminer que l'état des moyens à bascule impaire a changé, des moyens de retenue impairs pour retenir l'état desdits moyens à bascule impaire pour l'une des positions de symbole, et des moyens (80) pour soumettre à une opération OU exclusif l'état des moyens à bascule impaire, l'état retenu desdits moyens à bascule impaire étant contenu dans les moyens de retenue impairs.

21. Appareil selon l'une quelconque des revendications 15 à 20, caractérisé en ce que chacun desdits moyens réagissant auxdits moyens de comptage de symboles (46) pour déclencher une cellule impaire ou paire d'échantillonnage et de maintien pendant la deuxième moitié de la position de symbole comporte.

22. Appareil selon l'une quelconque des revendications 15 à 21, caractérisé en ce que lesdits moyens (122, 124) pour initialiser lesdites premières cellules paires et impaires d'échantillonnage et de maintien comportent des moyens réagissant auxdits moyens de comptage de symboles (46) pour déclencher une première desdites n cellules paires et impaires d'échantillonnage et de maintien pendant la position de symbole forcée à ne recevoir jamais une marque d'enregistrement.

23. Appareil selon la revendication 15, caractérisé en ce que n est égal à 2 et en ce que l'appareil est muni de moyens (132) pour initialiser un registre d'erreur dans un état d'enregistrement correct et de moyens réagissant à la non-apparition de l'un desdits signaux d'enregistrement corrects pairs et impairs à la fin d'un symbole pour changer l'état dudit registre d'erreur en un état d'enregistrement incorrect.

24. Appareil selon la revendication 23, caractérisé en ce que lesdits moyens comparateurs pairs (62) comportent, d'une part, une bascule pair pour retenir l'état des moyens comparateurs pairs et, d'autre part, des moyens pour déclencher la bascule pair lors de chaque déclenchement de l'une desdites cellules impaires d'échantillonnage et de maintien.

25. Appareil selon la revendication 23 ou 24, caractérisé en ce que lesdits moyens comparateurs impairs (64) comportent, d'une part, une bascule impaire pour retenir l'état des moyens comparateurs impairs et, d'autre part, des moyens pour déclencher la bascule impaire lors de chaque déclenchement de l'une desdites cellules d'échantillonnage et de maintien.

26. Appareil selon la revendication 24 ou 25, caractérisé en ce qu'il comporte des moyens (76) pour déterminer que la sortie de comparateur pair a changé, des moyens de retenue paris pour retenir l'état de la sortie de ladite bascule paire pour l'une des positions de symbole et des moyens (78) pour soumettre à une opération OU exclusif la sortie de la bascule paire, la sortie retenue de la bascule paire étant contenue dans les moyens de retenue pairs.

27. Appareil selon la revendication 25 ou 26, caractérisé en ce qu'il comporte des moyens (76) pour déterminer que la sortie de comparateur impair a changé, des moyens de retenue impairs pour retenir l'état de la sortie de ladite bascule impaire pour l'une des positions de symbole et des moyens (80) pour soumettre à une opération OU exclusif la sortie de la bascule impaire, la sortie retenue de la bascule impaire étant contenue dans les moyens de retenue impairs.

28. Appareil selon l'une quelconque des revendications 23 à 27, caractérisé en ce que chacun desdits moyens réagissant auxdits moyens de comptage de symboles pour déclencher une cellule impaire ou paire d'échantillonnage et de maintien dans toute position d'un symbole comporte des moyens rythmeurs (44) pour déclencher ladite cellule impaire ou paire d'échantillonnage et de maintien pendant la deuxième moitié de la position de symbole.

29. Appareil selon l'une quelconque des revendications 23 à 28, caractérisé en ce que lesdits moyens pour initialiser lesdites premières cellules paires et impaires d'échantillonnage et de maintien comportent des moyens réagissant auxdits moyens de comptage de symboles (46) pour déclencher lors de chaque symbole une première desdites deux paires paires et impaires.de cellules d'échantillonnage et de maintien pendant la position de symbole forcée à ne recevoir jamais une marque d'enregistrement.

FIG. 1

EP 0 154 389 B1

SIGNAL FORM                    CONTENT

0   1   2   3   4   5   6   7   8

0000

0001

0010

0011

0100

0101

0110

0111

1000

1001

1010

1011

1100

1101

1110

1111

QUAD-BIT

**FIG. 2**   $t_0$   $4\frac{1}{2}T_0$

TOON (TWO OUT OF NINE POSITIONS)

90 n SEC

5a                                        ZCK

5b                                        SCK

5c                                        REM

5d                                        $\overline{SAR}$ —

5e                                        $S_i$

**FIG. 5**

FIG. 3

FIG. 4

EP 0 154 389 B1

FIG. 6

FIG. 7

232

1 2 3 4 5 6 7 8

SI

S3

FIG. 8

TPO          TPI          TP2

TNC3    D   Q     D   Q     D   Q     D   Q    TP3

170         170         170         170

2CK

FIG. 10

8

FIG. 9

FIG. 11

READ TIMING

| | | |
|---|---|---|
| 11a | | |
| 11b | 2CK | |
| 11c | TNC STATUS | 0 1 2 3 4 5 6 7 8 0 1 2 3 4 5 6 7 8 0 |
| 11d | SCK | |
| 11e | $\overline{SAR}$ | |
| 11f | $S_2$ | |
| 11g | $S_4$ | |
| 11h | $S_1$ | |
| 11i | $S_3$ | |
| 11j | EVEN | |
| 11k | ODD | |
| 11l | LDE | |
| 11m | LDO | |
| 11n | TOON-BIT 1,2 STATUS | 0 1 2 3 0 1 2 3 0 |
| 11o | $\overline{RER}$ | |
| 11p | $TNC_3$ | |
| 11q | $TNC_0$ | |

1 SYMBOL (1 NIBBLE)

EP 0 154 389 B1

FIG. 12

FIG. 13

FIG. 14

FIG. 15

EP 0 154 389 B1

FIG. 16